# EUROPEAN PATENT APPLICATION

(11) **EP 4 716 125 A1**
(43) Date of publication of application: **25.03.2026**
(21) Application number: 24822580.7
(22) Date of filing: 03.06.2024
(51) Int. Cl.: H04L 1/00

(54) **COMMUNICATION METHOD BASED ON ALIGNMENT MARKER (AM), AND RELATED APPARATUS**

(30) Priority: 12.06.2023 CN 202310695255
(71) Applicant: Huawei Technologies Co., Ltd., Shenzhen, Guangdong 518129 (CN)
(72) Inventor: LI, Liang, Shenzhen, Guangdong 518129 (CN); KOU, Hanjun, Shenzhen, Guangdong 518129 (CN); LU, Yuchun, Shenzhen, Guangdong 518129 (CN); LIU, Yongzhi, Shenzhen, Guangdong 518129 (CN); QIU, Xianwen, Shenzhen, Guangdong 518129 (CN)
(74) Representative: Körber, Martin Hans
(86) International application number: PCT/CN2024/096973
(87) International publication number: WO 2024/255628

(57) **Abstract**

Embodiments of this application provide an alignment marker AM-based communication method and a related apparatus. The method includes: A first communication apparatus sends a first alignment marker AM to a second communication apparatus, where the first AM indicates the second communication apparatus to adjust a forward error correction FEC mode. The first communication apparatus receives a second AM from the second communication apparatus, where the second AM indicates that the second communication apparatus has adjusted the FEC mode. Indication information for adjusting the forward error correction FEC mode is transferred via the AM, so that the AM is fully utilized, to implement the lossless information transfer based on the AM. This enhances the utilization of the AM and communication efficiency.

## Description

This application claims priority to Chinese Patent Application No. CN 202310695255.3, filed with the China National Intellectual Property Administration on June 12, 2023 and entitled "ALIGNMENT MARKER AM-BASED COMMUNICATION METHOD AND RELATED APPARATUS" which is incorporated herein by reference in its entirety.

### TECHNICAL FIELD

This application relates to the field of communication technologies, and in particular, to an alignment marker AM-based communication method and a related apparatus.

### BACKGROUND

Starting from the era of 40-gigabit Ethernet (Gigabit Ethernet, GE)/100GE, a multi-lane (multi PCS lane)-based data distribution technology is introduced at a physical coding sublayer (Physical Coding Sublayer, PCS). A transmitter periodically inserts alignment markers (Alignment Marker, AM) into physical coding sublayer lanes (PCS lane), allowing a receiver to perform inter-lane data alignment and lane number identification based on the AMs. This helps cancel impact of inconsistent signal transmission rates across the lanes and restore a sequence of data from the transmitter.

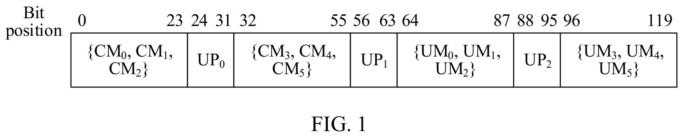

Currently, AM attributes remain consistent across different Ethernet rate specifications. The Ethernet rate specification "200GBASE-R PCS" and the Ethernet rate specification "400GBASE-R PCS" are used as examples. A format of an AM of each PCS lane is shown in FIG. 1 illustrating a diagram of a structure of an AM. The AM includes a common marker (common marker, CM) field, a unique marker (unique marker, UM) field, and a unique pad (unique pad, UP) field. The CM field is a field shared by PCS lanes (briefly referred to as lanes), and the UM field and the UP field are unique fields of each lane. The CM field is used for data alignment across lanes, and the UM field and the UP field are used for port number identification.

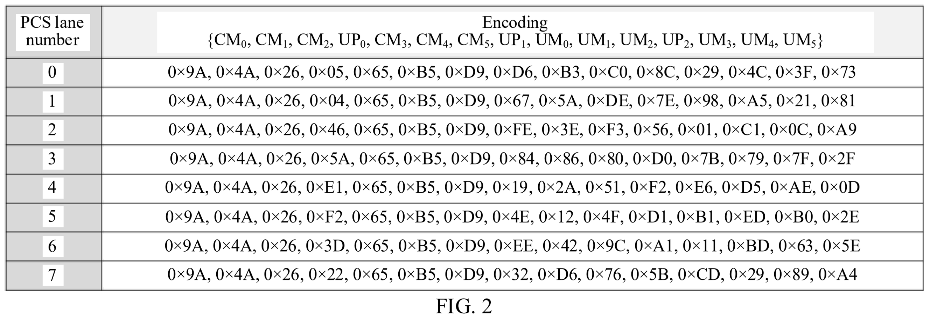

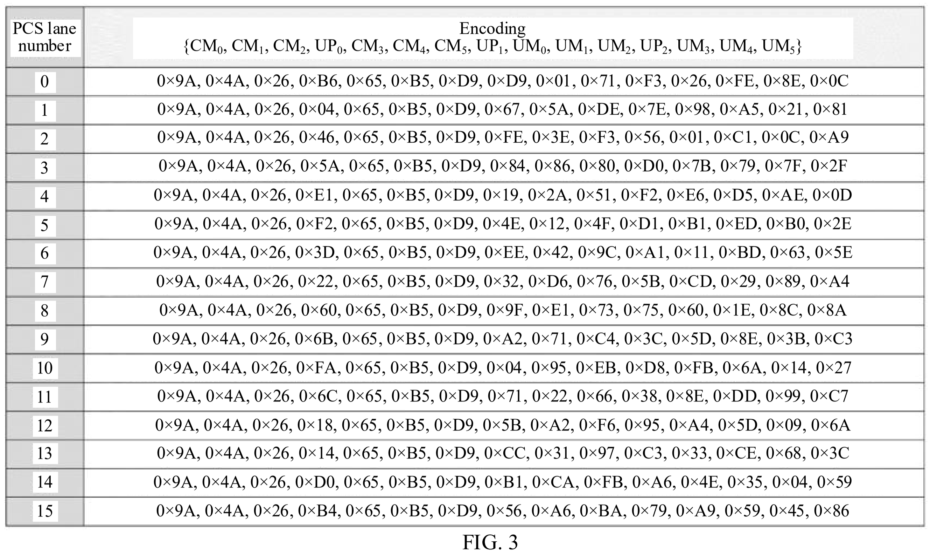

In the context of "200GBASE-R PCS", specific content included in an AM is shown in FIG. 2 illustrating a diagram of AM encoding in 200GBASE-R. In the context of "400GBASE-R PCS", specific content included in an AM is shown in FIG. 3 illustrating a diagram of AM encoding in 400GBASE-R. It can be learned from FIG. 2 and FIG. 3 that content in the AM depends on a PCS lane number (PCS lane number), and content included in CM₀ fields to CM₅ fields are the same across all AMs, allowing common synchronization across PCS lanes.

Through research, applicants find that AMs inserted into data streams become functionally redundant once the transmitter and the receiver utilize the AMs to achieve inter-lane data alignment and lane number identification. Consequently, the AMs inserted into the data streams actually consume communication resources unnecessarily.

### SUMMARY

According to a first aspect, an embodiment of this application provides an alignment marker AM-based communication method, including:

A first communication apparatus sends a first alignment marker AM to a second communication apparatus, where the first AM indicates the second communication apparatus to adjust a forward error correction FEC mode. Then, the first communication apparatus receives a second AM from the second communication apparatus, and determines, based on the second AM, that the second communication apparatus has adjusted the FEC mode. In this way, the first communication apparatus communicates with the second communication apparatus using the adjusted FEC mode. The first communication apparatus transfers, by using the AM, indication information for adjusting the forward error correction FEC mode, so that the AM is fully utilized, to implement the lossless information transfer based on the AM, thereby improving the utilization of the AM and communication efficiency.

With reference to the first aspect, in a possible implementation of the first aspect, the first AM includes a first unique marker UM field combination, the first UM field combination includes a plurality of UM fields, and the first UM field combination indicates the second communication apparatus to adjust the FEC mode. Specifically, the first communication apparatus implements information transfer by using the first UM field combination included in the first AM, to improve communication efficiency.

With reference to the first aspect, in a possible implementation of the first aspect, the first UM field combination indicates the second communication apparatus to upgrade a type of the FEC mode; or the first UM field combination indicates the second communication apparatus to downgrade a type of the FEC mode. The first UM field combination may indicate the second communication apparatus to upgrade the type of the FEC mode or downgrade the type of the FEC mode, so that convenience of adjusting the FEC mode is improved.

With reference to the first aspect, in a possible implementation of the first aspect, the second AM includes a second unique marker UM field combination, the second UM field combination includes a plurality of UM fields, and the second UM field combination indicates that the second communication apparatus has adjusted the FEC mode. Specifically, the second communication apparatus implements information transfer by using the second UM field combination included in the second AM, to improve communication efficiency.

With reference to the first aspect, in a possible implementation of the first aspect, the second UM field combination indicates that the second communication apparatus has upgraded the type of the FEC mode; or the second UM field combination indicates that the second communication apparatus has downgraded the type of the FEC mode. The second UM field combination may indicate that the second communication apparatus has upgraded to the type of the FEC mode or has downgraded to the type of the FEC mode, so that convenience of adjusting the FEC mode is improved.

With reference to the first aspect, in a possible implementation of the first aspect, the first UM field combination is formed by a codeword included in a first codeword set, the first codeword set includes a plurality of codewords, the codeword included in the first codeword set is formed by 5-bit payload data and 11 parity bits, and the parity bits are obtained by encoding the payload data using an extended Bose-Chaudhuri-Hocquenghem eBCH (16, 5) encoding scheme. The first UM field combination is formed by the codeword included in the first codeword set, and the first codeword set is obtained through eBCH (16, 5) encoding. Therefore, the first UM field combination meets characteristics of a large Hamming distance and direct current (DC) equalization. This improves communication performance.

With reference to the first aspect, in a possible implementation of the first aspect, the second UM field combination is formed by a codeword included in a first codeword set, the first codeword set includes a plurality of codewords, the codeword included in the first codeword set is formed by 5-bit payload data and 11 parity bits, and the parity bits are obtained by encoding the payload data using an extended Bose-Chaudhuri-Hocquenghem eBCH (16, 5) encoding scheme. The second UM field combination is formed by the codeword included in the first codeword set, and the first codeword set is obtained through eBCH (16, 5) encoding. Therefore, the second UM field combination meets characteristics of a large Hamming distance and direct current (DC) equalization. This improves communication performance.

With reference to the first aspect, in a possible implementation of the first aspect, the first codeword set includes any one or more of the following codewords:
0 0 1 0 0 0 1 1 1 1 0 1 0 1 1 0,
0 1 0 0 0 1 1 1 1 0 1 0 1 1 0 0,
0 1 0 1 1 0 0 1 0 0 0 1 1 1 1 0,
0 1 1 0 1 1 1 0 0 0 0 1 0 1 0 1,
0 1 1 1 0 0 0 0 1 0 1 0 0 1 1 1,
1000111101011000,
1 0 1 1 0 0 1 0 0 0 1 1 1 1 0 0,
1 0 1 1 1 0 0 0 0 1 0 1 0 0 1 1,
1 1 0 1 0 1 1 0 0 1 0 0 0 1 1 0, or
1101110000101001.
The first codeword set meets the characteristics of the large Hamming distance and the direct current (DC) equalization.

With reference to the first aspect, in a possible implementation of the first aspect, a length of the first AM is 120 bits, and a length of the second AM is 120 bits. The first AM and the second AM are compatible with a current standard Ethernet.

With reference to the first aspect, in a possible implementation of the first aspect, the first AM further includes a first common marker CM field combination and a first unique pad UP field. The first CM field combination includes six CM fields, each having a length of eight bits. The six CM fields included in the first CM field combination are evenly separated by the first UP field, and a length of the first UP field is eight bits. The first UM field combination includes eight UM fields, each having a length of eight bits. The first AM is compatible with an AM format in a conventional technology, and the UP field in the current AM format is fully utilized, so that communication efficiency is improved.

With reference to the first aspect, in a possible implementation of the first aspect, the first UM field combination includes a first UM field, a second UM field, a third UM field, a fourth UM field, a fifth UM field, a sixth UM field, a seventh UM field, and an eighth UM field. The first UM field and the second UM field are formed by a first codeword, the third UM field and the fourth UM field are formed by a second codeword, the fifth UM field and the sixth UM field are formed by a third codeword, and the seventh UM field and the eighth UM field are formed by a fourth codeword. The first codeword, the second codeword, the third codeword, and the fourth codeword belong to the first codeword set.

With reference to the first aspect, in a possible implementation of the first aspect, the second AM further includes a second common marker CM field combination and a second unique pad UP field. The second CM field combination includes six CM fields, each having a length of eight bits. The six CM fields included in the second CM field combination are evenly separated by the second UP field, and a length of the second UP field is eight bits. The second UM field combination includes eight UM fields, each having a length of eight bits. The first AM is compatible with an AM format in the conventional technology, and the UP field in the current AM format is fully utilized, so that communication efficiency is improved.

With reference to the first aspect, in a possible implementation of the first aspect, the second UM field combination includes a ninth UM field, a tenth UM field, an eleventh UM field, a twelfth UM field, a thirteenth UM field, a fourteenth UM field, a fifteenth UM field, and a sixteenth UM field. The ninth UM field and the tenth UM field are formed by a fifth codeword, the eleventh UM field and the twelfth UM field are formed by a sixth codeword, the thirteenth UM field and the fourteenth UM field are formed by a seventh codeword, and the fifteenth UM field and the sixteenth UM field are formed by an eighth codeword. The fifth codeword, the sixth codeword, the seventh codeword, and the eighth codeword belong to the first codeword set.

With reference to the first aspect, in a possible implementation of the first aspect, the first UP field is any one of the following: 0x1E, 0x2D, 0x4B, 0x78, 0x87, 0xB4, 0xD2, 0x87, or 0xE1. The codeword included in the first UP field meets DC equalization.

With reference to the first aspect, in a possible implementation of the first aspect, the second UP field is any one of the following: 0x1E, 0x2D, 0x4B, 0x78, 0x87, 0xB4, 0xD2, 0x87, or 0xE1. The codeword included in the second UP field meets DC equalization.

With reference to the first aspect, in a possible implementation of the first aspect, after the first communication apparatus sends the first alignment marker AM to the second communication apparatus, the method further includes: The first communication apparatus sends a third alignment marker AM to the second communication apparatus, where the third AM indicates the second communication apparatus to adjust the forward error correction FEC mode. After the first communication apparatus receives the second AM from the second communication apparatus, the method further includes: The first communication apparatus receives a fourth AM from the second communication apparatus, where the fourth AM indicates that the second communication apparatus has adjusted the FEC mode. Two consecutive request messages for requesting to adjust the FEC mode and two consecutive response messages confirming the adjustment of the FEC mode are used, to prevent mis-identification of the FEC mode adjustment over a long period of time, and improve accuracy of the FEC mode adjustment.

According to a second aspect, an embodiment of this application provides an alignment marker AM-based communication method, including:

A second communication apparatus receives a first alignment marker AM from a first communication apparatus, where the first AM indicates the second communication apparatus to adjust a forward error correction FEC mode. Then, the second communication apparatus sends a second AM to the first communication apparatus, where the second AM indicates that the second communication apparatus has adjusted the FEC mode. The second communication apparatus adjusts the FEC mode in response to the first AM. Finally, the second communication apparatus communicates with the first communication apparatus using the adjusted FEC mode. The second communication apparatus transfers, by using the AM, indication information for adjusting the forward error correction FEC mode, so that the AM is fully utilized, to implement the lossless information transfer based on the AM, thereby improving the utilization of the AM and communication efficiency.

With reference to the second aspect, in a possible implementation of the second aspect, the first AM includes a first unique marker UM field combination, the first UM field combination includes a plurality of UM fields, and the first UM field combination indicates the second communication apparatus to adjust the FEC mode. Specifically, the first communication apparatus implements information transfer by using the first UM field combination included in the first AM, to improve communication efficiency.

With reference to the second aspect, in a possible implementation of the second aspect, the first UM field combination indicates the second communication apparatus to upgrade a type of the FEC mode; or the first UM field combination indicates the second communication apparatus to downgrade a type of the FEC mode. The first UM field combination may indicate the second communication apparatus to upgrade the type of the FEC mode or downgrade the type of the FEC mode, so that convenience of adjusting the FEC mode is improved.

With reference to the second aspect, in a possible implementation of the second aspect, the second AM includes a second unique marker UM field combination, the second UM field combination includes a plurality of UM fields, and the second UM field combination indicates that the second communication apparatus has adjusted the FEC mode. Specifically, the second communication apparatus implements information transfer by using the second UM field combination included in the second AM, to improve communication efficiency.

With reference to the second aspect, in a possible implementation of the second aspect, the second UM field combination indicates that the second communication apparatus has upgraded the type of the FEC mode; or the second UM field combination indicates that the second communication apparatus has downgraded the type of the FEC mode. The second UM field combination may indicate that the second communication apparatus has upgraded to the type of the FEC mode or has downgraded to the type of the FEC mode, so that convenience of adjusting the FEC mode is improved.

With reference to the second aspect, in a possible implementation of the second aspect, the first UM field combination is formed by a codeword included in a first codeword set, the first codeword set includes a plurality of codewords, the codeword included in the first codeword set is formed by 5-bit payload data and 11 parity bits, and the parity bits are obtained by encoding the payload data using an extended Bose-Chaudhuri-Hocquenghem eBCH (16, 5) encoding scheme. The first UM field combination is formed by the codeword included in the first codeword set, and the first codeword set is obtained through eBCH (16, 5) encoding. Therefore, the first UM field combination meets characteristics of a large Hamming distance and direct current (DC) equalization. This improves communication performance.

With reference to the second aspect, in a possible implementation of the second aspect, the second UM field combination is formed by a codeword included in a first codeword set, the first codeword set includes a plurality of codewords, the codeword included in the first codeword set is formed by 5-bit payload data and 11 parity bits, and the parity bits are obtained by encoding the payload data using an extended Bose-Chaudhuri-Hocquenghem eBCH (16, 5) encoding scheme. The second UM field combination is formed by the codeword included in the first codeword set, and the first codeword set is obtained through eBCH (16, 5) encoding. Therefore, the second UM field combination meets characteristics of a large Hamming distance and direct current (DC) equalization. This improves communication performance.

With reference to the second aspect, in a possible implementation of the second aspect, the first codeword set includes any one or more of the following codewords:
0 0 1 0 0 0 1 1 1 1 0 1 0 1 1 0,
0 1 0 0 0 1 1 1 1 0 1 0 1 1 0 0,
0 1 0 1 1 0 0 1 0 0 0 1 1 1 1 0,
0 1 1 0 1 1 1 0 0 0 0 1 0 1 0 1,
0 1 1 1 0 0 0 0 1 0 1 0 0 1 1 1,
1000111101011000,
1 0 1 1 0 0 1 0 0 0 1 1 1 1 0 0,
1 0 1 1 1 0 0 0 0 1 0 1 0 0 1 1,
1 1 0 1 0 1 1 0 0 1 0 0 0 1 1 0, or
1101110000101001.
The first codeword set meets the characteristics of the large Hamming distance and the direct current (DC) equalization.

With reference to the second aspect, in a possible implementation of the second aspect, a length of the first AM is 120 bits, and a length of the second AM is 120 bits. The first AM and the second AM are compatible with a current standard Ethernet.

With reference to the second aspect, in a possible implementation of the second aspect, the first AM further includes a first common marker CM field combination and a first unique pad UP field. The first CM field combination includes six CM fields, each having a length of eight bits. The six CM fields included in the first CM field combination are evenly separated by the first UP field, and a length of the first UP field is eight bits. The first UM field combination includes eight UM fields, each having a length of eight bits. The first AM is compatible with an AM format in the conventional technology, and the UP field in the current AM format is fully utilized, so that communication efficiency is improved.

With reference to the second aspect, in a possible implementation of the second aspect, the first UM field combination includes a first UM field, a second UM field, a third UM field, a fourth UM field, a fifth UM field, a sixth UM field, a seventh UM field, and an eighth UM field. The first UM field and the second UM field are formed by a first codeword, the third UM field and the fourth UM field are formed by a second codeword, the fifth UM field and the sixth UM field are formed by a third codeword, and the seventh UM field and the eighth UM field are formed by a fourth codeword. The first codeword, the second codeword, the third codeword, and the fourth codeword belong to the first codeword set.

With reference to the second aspect, in a possible implementation of the second aspect, the second AM further includes a second common marker CM field combination and a second unique pad UP field. The second CM field combination includes six CM fields, each having a length of eight bits. The six CM fields included in the second CM field combination are evenly separated by the second UP field, and a length of the second UP field is eight bits. The second UM field combination includes eight UM fields, each having a length of eight bits. The first AM is compatible with an AM format in the conventional technology, and the UP field in the current AM format is fully utilized, so that communication efficiency is improved.

With reference to the second aspect, in a possible implementation of the second aspect, the second UM field combination includes a ninth UM field, a tenth UM field, an eleventh UM field, a twelfth UM field, a thirteenth UM field, a fourteenth UM field, a fifteenth UM field, and a sixteenth UM field. The ninth UM field and the tenth UM field are formed by a fifth codeword, the eleventh UM field and the twelfth UM field are formed by a sixth codeword, the thirteenth UM field and the fourteenth UM field are formed by a seventh codeword, and the fifteenth UM field and the sixteenth UM field are formed by an eighth codeword. The fifth codeword, the sixth codeword, the seventh codeword, and the eighth codeword belong to the first codeword set.

With reference to the second aspect, in a possible implementation of the second aspect, the first UP field is any one of the following: 0x1E, 0x2D, 0x4B, 0x78, 0x87, 0xB4, 0xD2, 0x87, or 0xE1. The codeword included in the first UP field meets DC equalization.

With reference to the second aspect, in a possible implementation of the second aspect, the second UP field is any one of the following: 0x1E, 0x2D, 0x4B, 0x78, 0x87, 0xB4, 0xD2, 0x87, or 0xE1. The codeword included in the second UP field meets DC equalization.

With reference to the second aspect, in a possible implementation of the second aspect, after the second communication apparatus receives the first alignment marker AM from the first communication apparatus, the method further includes: The second communication apparatus receives a third alignment marker AM from the first communication apparatus, where the third AM indicates the second communication apparatus to adjust the forward error correction FEC mode. After the second communication apparatus sends the second AM to the first communication apparatus, the method further includes: The second communication apparatus sends a fourth AM to the first communication apparatus, where the fourth AM indicates that the second communication apparatus has adjusted the FEC mode. Two consecutive request messages for requesting to adjust the FEC mode and two consecutive response messages confirming the adjustment of the FEC mode are used, to prevent mis-identification of the FEC mode adjustment over a long period of time, and improve accuracy of the FEC mode adjustment.

According to a third aspect, an embodiment of this application provides a communication apparatus. The communication apparatus is used as a first communication apparatus, and the communication apparatus includes a transceiver module and a processing module.

The transceiver module is configured to send a first alignment marker AM to a second communication apparatus, where the first AM indicates the second communication apparatus to adjust a forward error correction FEC mode.

The transceiver module is further configured to receive a second AM from the second communication apparatus, where the second AM indicates that the second communication apparatus has adjusted the FEC mode.

In a possible implementation, the first AM includes a first unique marker UM field combination, the first UM field combination includes a plurality of UM fields, and the first UM field combination indicates the second communication apparatus to adjust the FEC mode.

In a possible implementation, the first UM field combination indicates the second communication apparatus to upgrade a type of the FEC mode; or the first UM field combination indicates the second communication apparatus to downgrade a type of the FEC mode.

In a possible implementation, the second AM includes a second unique marker UM field combination, the second UM field combination includes a plurality of UM fields, and the second UM field combination indicates that the second communication apparatus has adjusted the FEC mode.

In a possible implementation, the second UM field combination indicates that the second communication apparatus has upgraded the type of the FEC mode; or the second UM field combination indicates that the second communication apparatus has downgraded the type of the FEC mode.

In a possible implementation, the first UM field combination is formed by a codeword included in a first codeword set, the first codeword set includes a plurality of codewords, the codeword included in the first codeword set is formed by 5-bit payload data and 11 parity bits, and the parity bits are obtained by encoding the payload data using an extended Bose-Chaudhuri-Hocquenghem eBCH (16, 5) encoding scheme.

In a possible implementation, the second UM field combination is formed by a codeword included in a first codeword set, the first codeword set includes a plurality of codewords, the codeword included in the first codeword set is formed by 5-bit payload data and 11 parity bits, and the parity bits are obtained by encoding the payload data using an extended Bose-Chaudhuri-Hocquenghem eBCH (16, 5) encoding scheme.

In a possible implementation, the first codeword set includes any one or more of the following codewords:
0 0 1 0 0 0 1 1 1 1 0 1 0 1 1 0,
0 1 0 0 0 1 1 1 1 0 1 0 1 1 0 0,
0 1 0 1 1 0 0 1 0 0 0 1 1 1 1 0,
0 1 1 0 1 1 1 0 0 0 0 1 0 1 0 1,
0 1 1 1 0 0 0 0 1 0 1 0 0 1 1 1,
1000111101011000,
1011001000111100,
1 0 1 1 1 0 0 0 0 1 0 1 0 0 1 1,
1 1 0 1 0 1 1 0 0 1 0 0 0 1 1 0, or
1101110000101001.

In a possible implementation, a length of the first AM is 120 bits, and a length of the second AM is 120 bits.

In a possible implementation, the first AM further includes a first common marker CM field combination and a first unique pad UP field. The first CM field combination includes six CM fields, each having a length of eight bits. The six CM fields included in the first CM field combination are evenly separated by the first UP field, and a length of the first UP field is eight bits. The first UM field combination includes eight UM fields, each having a length of eight bits.

In a possible implementation, the first UM field combination includes a first UM field, a second UM field, a third UM field, a fourth UM field, a fifth UM field, a sixth UM field, a seventh UM field, and an eighth UM field. The first UM field and the second UM field are formed by a first codeword, the third UM field and the fourth UM field are formed by a second codeword, the fifth UM field and the sixth UM field are formed by a third codeword, and the seventh UM field and the eighth UM field are formed by a fourth codeword. The first codeword, the second codeword, the third codeword, and the fourth codeword belong to the first codeword set.

In a possible implementation, the second AM further includes a second common marker CM field combination and a second unique pad UP field. The second CM field combination includes six CM fields, each having a length of eight bits. The six CM fields included in the second CM field combination are evenly separated by the second UP field, and a length of the second UP field is eight bits. The second UM field combination includes eight UM fields, each having a length of eight bits.

In a possible implementation, the second UM field combination includes a ninth UM field, a tenth UM field, an eleventh UM field, a twelfth UM field, a thirteenth UM field, a fourteenth UM field, a fifteenth UM field, and a sixteenth UM field. The ninth UM field and the tenth UM field are formed by a fifth codeword, the eleventh UM field and the twelfth UM field are formed by a sixth codeword, the thirteenth UM field and the fourteenth UM field are formed by a seventh codeword, and the fifteenth UM field and the sixteenth UM field are formed by an eighth codeword. The fifth codeword, the sixth codeword, the seventh codeword, and the eighth codeword belong to the first codeword set.

In a possible implementation, the first UP field is any one of the following: 0x1E, 0x2D, 0x4B, 0x78, 0x87, 0xB4, 0xD2, 0x87, or 0xE1.

In a possible implementation, the second UP field is any one of the following: 0x1E, 0x2D, 0x4B, 0x78, 0x87, 0xB4, 0xD2, 0x87, or 0xE1.

In a possible implementation,
the transceiver module is further configured to send a third alignment marker AM to the second communication apparatus, where the third AM indicates the second communication apparatus to adjust the forward error correction FEC mode.

The transceiver module is further configured to receive a fourth AM from the second communication apparatus, where the fourth AM indicates that the second communication apparatus has adjusted the FEC mode.

According to a fourth aspect, an embodiment of this application provides a communication apparatus. The communication apparatus is used as a second communication apparatus, and the communication apparatus includes a transceiver module and a processing module.

The transceiver module is configured to receive a first alignment marker AM from a first communication apparatus, where the first AM indicates the second communication apparatus to adjust a forward error correction FEC mode.

The transceiver module is further configured to send a second AM to the first communication apparatus, where the second AM indicates that the second communication apparatus has adjusted the FEC mode.

The transceiver module is further configured to communicate with the first communication apparatus using the adjusted FEC mode.

In a possible implementation, the first AM includes a first unique marker UM field combination, the first UM field combination includes a plurality of UM fields, and the first UM field combination indicates the second communication apparatus to adjust the FEC mode.

In a possible implementation, the first UM field combination indicates the second communication apparatus to upgrade a type of the FEC mode; or the first UM field combination indicates the second communication apparatus to downgrade a type of the FEC mode.

In a possible implementation, the second AM includes a second unique marker UM field combination, the second UM field combination includes a plurality of UM fields, and the second UM field combination indicates that the second communication apparatus has adjusted the FEC mode.

In a possible implementation, the second UM field combination indicates that the second communication apparatus has upgraded the type of the FEC mode; or the second UM field combination indicates that the second communication apparatus has downgraded the type of the FEC mode.

In a possible implementation, the first UM field combination is formed by a codeword included in a first codeword set, the first codeword set includes a plurality of codewords, the codeword included in the first codeword set is formed by 5-bit payload data and 11 parity bits, and the parity bits are obtained by encoding the payload data using an extended Bose-Chaudhuri-Hocquenghem eBCH (16, 5) encoding scheme.

In a possible implementation, the second UM field combination is formed by a codeword included in a first codeword set, the first codeword set includes a plurality of codewords, the codeword included in the first codeword set is formed by 5-bit payload data and 11 parity bits, and the parity bits are obtained by encoding the payload data using an extended Bose-Chaudhuri-Hocquenghem eBCH (16, 5) encoding scheme.

In a possible implementation, the first codeword set includes any one or more of the following codewords:
0 0 1 0 0 0 1 1 1 1 0 1 0 1 1 0,
0 1 0 0 0 1 1 1 1 0 1 0 1 1 0 0,
0 1 0 1 1 0 0 1 0 0 0 1 1 1 1 0,
0 1 1 0 1 1 1 0 0 0 0 1 0 1 0 1,
0 1 1 1 0 0 0 0 1 0 1 0 0 1 1 1,
1000111101011000,
1011001000111100,
1 0 1 1 1 0 0 0 0 1 0 1 0 0 1 1,
1 1 0 1 0 1 1 0 0 1 0 0 0 1 1 0, or
1101110000101001.

In a possible implementation, a length of the first AM is 120 bits, and a length of the second AM is 120 bits.

In a possible implementation, the first AM further includes a first common marker CM field combination and a first unique pad UP field. The first CM field combination includes six CM fields, each having a length of eight bits. The six CM fields included in the first CM field combination are evenly separated by the first UP field, and a length of the first UP field is eight bits. The first UM field combination includes eight UM fields, each having a length of eight bits.

In a possible implementation, the first UM field combination includes a first UM field, a second UM field, a third UM field, a fourth UM field, a fifth UM field, a sixth UM field, a seventh UM field, and an eighth UM field. The first UM field and the second UM field are formed by a first codeword, the third UM field and the fourth UM field are formed by a second codeword, the fifth UM field and the sixth UM field are formed by a third codeword, and the seventh UM field and the eighth UM field are formed by a fourth codeword. The first codeword, the second codeword, the third codeword, and the fourth codeword belong to the first codeword set.

In a possible implementation, the second AM further includes a second common marker CM field combination and a second unique pad UP field. The second CM field combination includes six CM fields, each having a length of eight bits. The six CM fields included in the second CM field combination are evenly separated by the second UP field, and a length of the second UP field is eight bits. The second UM field combination includes eight UM fields, each having a length of eight bits.

In a possible implementation, the second UM field combination includes a ninth UM field, a tenth UM field, an eleventh UM field, a twelfth UM field, a thirteenth UM field, a fourteenth UM field, a fifteenth UM field, and a sixteenth UM field. The ninth UM field and the tenth UM field are formed by a fifth codeword, the eleventh UM field and the twelfth UM field are formed by a sixth codeword, the thirteenth UM field and the fourteenth UM field are formed by a seventh codeword, and the fifteenth UM field and the sixteenth UM field are formed by an eighth codeword. The fifth codeword, the sixth codeword, the seventh codeword, and the eighth codeword belong to the first codeword set.

In a possible implementation, the first UP field is any one of the following: 0x1E, 0x2D, 0x4B, 0x78, 0x87, 0xB4, 0xD2, 0x87, or 0xE1.

In a possible implementation, the second UP field is any one of the following: 0x1E, 0x2D, 0x4B, 0x78, 0x87, 0xB4, 0xD2, 0x87, or 0xE1.

In a possible implementation, the transceiver module is further configured to receive a third alignment marker AM from the first communication apparatus, where the third AM indicates the second communication apparatus to adjust the forward error correction FEC mode.

The transceiver module is further configured to send a fourth AM to the first communication apparatus, where the fourth AM indicates that the second communication apparatus has adjusted the FEC mode.

According to a fifth aspect, an embodiment of this application provides a communication apparatus. The communication apparatus is used as a first communication apparatus, and the communication apparatus includes a communication interface and a processor.

The communication interface is configured to send a first alignment marker AM to a second communication apparatus, where the first AM indicates the second communication apparatus to adjust a forward error correction FEC mode.

The communication interface is further configured to receive a second AM from the second communication apparatus, where the second AM indicates that the second communication apparatus has adjusted the FEC mode.

In a possible implementation, the first AM includes a first unique marker UM field combination, the first UM field combination includes a plurality of UM fields, and the first UM field combination indicates the second communication apparatus to adjust the FEC mode.

In a possible implementation, the first UM field combination indicates the second communication apparatus to upgrade a type of the FEC mode; or the first UM field combination indicates the second communication apparatus to downgrade a type of the FEC mode.

In a possible implementation, the second AM includes a second unique marker UM field combination, the second UM field combination includes a plurality of UM fields, and the second UM field combination indicates that the second communication apparatus has adjusted the FEC mode.

In a possible implementation, the second UM field combination indicates that the second communication apparatus has upgraded the type of the FEC mode; or the second UM field combination indicates that the second communication apparatus has downgraded the type of the FEC mode.

In a possible implementation, the first UM field combination is formed by a codeword included in a first codeword set, the first codeword set includes a plurality of codewords, the codeword included in the first codeword set is formed by 5-bit payload data and 11 parity bits, and the parity bits are obtained by encoding the payload data using an extended Bose-Chaudhuri-Hocquenghem eBCH (16, 5) encoding scheme.

In a possible implementation, the second UM field combination is formed by a codeword included in a first codeword set, the first codeword set includes a plurality of codewords, the codeword included in the first codeword set is formed by 5-bit payload data and 11 parity bits, and the parity bits are obtained by encoding the payload data using an extended Bose-Chaudhuri-Hocquenghem eBCH (16, 5) encoding scheme.

In a possible implementation, the first codeword set includes any one or more of the following codewords:
0 0 1 0 0 0 1 1 1 1 0 1 0 1 1 0,
0 1 0 0 0 1 1 1 1 0 1 0 1 1 0 0,
0 1 0 1 1 0 0 1 0 0 0 1 1 1 1 0,
0 1 1 0 1 1 1 0 0 0 0 1 0 1 0 1,
0 1 1 1 0 0 0 0 1 0 1 0 0 1 1 1,
1000111101011000,
1 0 1 1 0 0 1 0 0 0 1 1 1 1 0 0,
1 0 1 1 1 0 0 0 0 1 0 1 0 0 1 1,
1 1 0 1 0 1 1 0 0 1 0 0 0 1 1 0, or
1101110000101001.

In a possible implementation, a length of the first AM is 120 bits, and a length of the second AM is 120 bits.

In a possible implementation, the first AM further includes a first common marker CM field combination and a first unique pad UP field. The first CM field combination includes six CM fields, each having a length of eight bits. The six CM fields included in the first CM field combination are evenly separated by the first UP field, and a length of the first UP field is eight bits. The first UM field combination includes eight UM fields, each having a length of eight bits.

In a possible implementation, the first UM field combination includes a first UM field, a second UM field, a third UM field, a fourth UM field, a fifth UM field, a sixth UM field, a seventh UM field, and an eighth UM field. The first UM field and the second UM field are formed by a first codeword, the third UM field and the fourth UM field are formed by a second codeword, the fifth UM field and the sixth UM field are formed by a third codeword, and the seventh UM field and the eighth UM field are formed by a fourth codeword. The first codeword, the second codeword, the third codeword, and the fourth codeword belong to the first codeword set.

In a possible implementation, the second AM further includes a second common marker CM field combination and a second unique pad UP field. The second CM field combination includes six CM fields, each having a length of eight bits. The six CM fields included in the second CM field combination are evenly separated by the second UP field, and a length of the second UP field is eight bits. The second UM field combination includes eight UM fields, each having a length of eight bits.

In a possible implementation, the second UM field combination includes a ninth UM field, a tenth UM field, an eleventh UM field, a twelfth UM field, a thirteenth UM field, a fourteenth UM field, a fifteenth UM field, and a sixteenth UM field. The ninth UM field and the tenth UM field are formed by a fifth codeword, the eleventh UM field and the twelfth UM field are formed by a sixth codeword, the thirteenth UM field and the fourteenth UM field are formed by a seventh codeword, and the fifteenth UM field and the sixteenth UM field are formed by an eighth codeword. The fifth codeword, the sixth codeword, the seventh codeword, and the eighth codeword belong to the first codeword set.

In a possible implementation, the first UP field is any one of the following: 0x1E, 0x2D, 0x4B, 0x78, 0x87, 0xB4, 0xD2, 0x87, or 0xE1.

In a possible implementation, the second UP field is any one of the following: 0x1E, 0x2D, 0x4B, 0x78, 0x87, 0xB4, 0xD2, 0x87, or 0xE1.

In a possible implementation,
the communication interface is further configured to send a third alignment marker AM to the second communication apparatus, where the third AM indicates the second communication apparatus to adjust the forward error correction FEC mode.

The communication interface is further configured to receive a fourth AM from the second communication apparatus, where the fourth AM indicates that the second communication apparatus has adjusted the FEC mode.

According to a sixth aspect, an embodiment of this application provides a communication apparatus. The communication apparatus is used as a second communication apparatus, and the communication apparatus includes a communication interface and a processor.

The communication interface is configured to receive a first alignment marker AM from a first communication apparatus, where the first AM indicates the second communication apparatus to adjust a forward error correction FEC mode.

The communication interface is further configured to send a second AM to the first communication apparatus, where the second AM indicates that the second communication apparatus has adjusted the FEC mode.

The communication interface is further configured to communicate with the first communication apparatus using the adjusted FEC mode.

In a possible implementation, the first AM includes a first unique marker UM field combination, the first UM field combination includes a plurality of UM fields, and the first UM field combination indicates the second communication apparatus to adjust the FEC mode.

In a possible implementation, the first UM field combination indicates the second communication apparatus to upgrade a type of the FEC mode; or the first UM field combination indicates the second communication apparatus to downgrade a type of the FEC mode.

In a possible implementation, the second AM includes a second unique marker UM field combination, the second UM field combination includes a plurality of UM fields, and the second UM field combination indicates that the second communication apparatus has adjusted the FEC mode.

In a possible implementation, the second UM field combination indicates that the second communication apparatus has upgraded the type of the FEC mode; or the second UM field combination indicates that the second communication apparatus has downgraded the type of the FEC mode.

In a possible implementation, the first UM field combination is formed by a codeword included in a first codeword set, the first codeword set includes a plurality of codewords, the codeword included in the first codeword set is formed by 5-bit payload data and 11 parity bits, and the parity bits are obtained by encoding the payload data using an extended Bose-Chaudhuri-Hocquenghem eBCH (16, 5) encoding scheme.

In a possible implementation, the second UM field combination is formed by a codeword included in a first codeword set, the first codeword set includes a plurality of codewords, the codeword included in the first codeword set is formed by 5-bit payload data and 11 parity bits, and the parity bits are obtained by encoding the payload data using an extended Bose-Chaudhuri-Hocquenghem eBCH (16, 5) encoding scheme.

In a possible implementation, the first codeword set includes any one or more of the following codewords:
0 0 1 0 0 0 1 1 1 1 0 1 0 1 1 0,
0 1 0 0 0 1 1 1 1 0 1 0 1 1 0 0,
0 1 0 1 1 0 0 1 0 0 0 1 1 1 1 0,
0 1 1 0 1 1 1 0 0 0 0 1 0 1 0 1,
0 1 1 1 0 0 0 0 1 0 1 0 0 1 1 1,
1000111101011000,
1 0 1 1 0 0 1 0 0 0 1 1 1 1 0 0,
1 0 1 1 1 0 0 0 0 1 0 1 0 0 1 1,
1 1 0 1 0 1 1 0 0 1 0 0 0 1 1 0, or
1101110000101001.

In a possible implementation, a length of the first AM is 120 bits, and a length of the second AM is 120 bits.

In a possible implementation, the first AM further includes a first common marker CM field combination and a first unique pad UP field. The first CM field combination includes six CM fields, each having a length of eight bits. The six CM fields included in the first CM field combination are evenly separated by the first UP field, and a length of the first UP field is eight bits. The first UM field combination includes eight UM fields, each having a length of eight bits.

In a possible implementation, the first UM field combination includes a first UM field, a second UM field, a third UM field, a fourth UM field, a fifth UM field, a sixth UM field, a seventh UM field, and an eighth UM field. The first UM field and the second UM field are formed by a first codeword, the third UM field and the fourth UM field are formed by a second codeword, the fifth UM field and the sixth UM field are formed by a third codeword, and the seventh UM field and the eighth UM field are formed by a fourth codeword. The first codeword, the second codeword, the third codeword, and the fourth codeword belong to the first codeword set.

In a possible implementation, the second AM further includes a second common marker CM field combination and a second unique pad UP field. The second CM field combination includes six CM fields, each having a length of eight bits. The six CM fields included in the second CM field combination are evenly separated by the second UP field, and a length of the second UP field is eight bits. The second UM field combination includes eight UM fields, each having a length of eight bits.

In a possible implementation, the second UM field combination includes a ninth UM field, a tenth UM field, an eleventh UM field, a twelfth UM field, a thirteenth UM field, a fourteenth UM field, a fifteenth UM field, and a sixteenth UM field. The ninth UM field and the tenth UM field are formed by a fifth codeword, the eleventh UM field and the twelfth UM field are formed by a sixth codeword, the thirteenth UM field and the fourteenth UM field are formed by a seventh codeword, and the fifteenth UM field and the sixteenth UM field are formed by an eighth codeword. The fifth codeword, the sixth codeword, the seventh codeword, and the eighth codeword belong to the first codeword set.

In a possible implementation, the first UP field is any one of the following: 0x1E, 0x2D, 0x4B, 0x78, 0x87, 0xB4, 0xD2, 0x87, or 0xE1.

In a possible implementation, the second UP field is any one of the following: 0x1E, 0x2D, 0x4B, 0x78, 0x87, 0xB4, 0xD2, 0x87, or 0xE1.

In a possible implementation, the communication interface is further configured to receive a third alignment marker AM from the first communication apparatus, where the third AM indicates the second communication apparatus to adjust the forward error correction FEC mode.

The communication interface is further configured to send a fourth AM to the first communication apparatus, where the fourth AM indicates that the second communication apparatus has adjusted the FEC mode.

According to a seventh aspect, an embodiment of this application provides a computer-readable storage medium storing one or more computer-executable instructions. When the computer-executable instructions are executed by a processor, the processor performs any one of the possible implementations of the first aspect or the second aspect.

According to an eighth aspect, an embodiment of this application provides a computer program product (or referred to as a computer program) storing one or more computer-executable instructions. When the computer-executable instructions are executed by a processor, the processor performs any one of the possible implementations of the first aspect or the second aspect.

According to a ninth aspect, this application provides a chip system. The chip system includes a processor, configured to support a computer device in implementing functions in the foregoing aspects. In a possible design, the chip system further includes a memory. The memory is configured to store program instructions and data that are necessary for the computer device. The chip system may include a chip, or may include a chip and another discrete device.

According to a tenth aspect, an embodiment of this application provides a chip system. The chip system includes at least one processor and a communication interface. The communication interface is interconnected to the at least one processor through a line, and the at least one processor is configured to run a computer program or instructions, to perform the method according to the first aspect.

The communication interface in the chip system may be an input/output interface, a pin, a circuit, or the like.

### BRIEF DESCRIPTION OF DRAWINGS

FIG. 1 is a diagram of a structure of an AM;
FIG. 2 is a diagram of AM encoding in 200GBASE-R;
FIG. 3 is a diagram of AM encoding in 400GBASE-R;
FIG. 4 is a diagram of a system architecture according to an embodiment of this application;
FIG. 5 is a diagram of AM sending;
FIG. 6 is a diagram of a Hamming distance between any two AMs in 200GBASE-R PCS;
FIG. 7 is a diagram of a Hamming distance between any two AMs in 400GBASE-R PCS;
FIG. 8 is a diagram of PAM4 Gray mapping;
FIG. 9 is a diagram of DC values of AMs in 200GBASE-R;
FIG. 10 is a diagram of DC values of AMs in 400GBASE-R;
FIG. 11 is a diagram of an embodiment of an alignment marker AM-based communication method according to an embodiment of this application;
FIG. 12 is a diagram of a structure of a first AM according to an embodiment of this application;
FIG. 13 is a diagram of a structure of a second AM according to an embodiment of this application;
FIG. 14 is a diagram of an encoding procedure according to an embodiment of this application;
FIG. 15 is a diagram of a first codeword set according to an embodiment of this application;
FIG. 16 is a diagram of a Hamming distance for a first codeword set according to an embodiment of this application;
FIG. 17 is a diagram of another structure of a first AM according to an embodiment of this application;
FIG. 18 is a diagram of still another structure of a first AM according to an embodiment of this application;
FIG. 19 is a diagram of another structure of a first UM field combination according to an embodiment of this application;
FIG. 20 is a diagram of another structure of a second AM according to an embodiment of this application;
FIG. 21 is a diagram of still another structure of a second AM according to an embodiment of this application;
FIG. 22 is a diagram of another structure of a second UM field combination according to an embodiment of this application;
FIG. 23 is a diagram of a structure of an alignment marker according to an embodiment of this application;
FIG. 24 is a diagram of an embodiment of an alignment marker AM-based communication method according to an embodiment of this application;
FIG. 25 is a diagram of an application scenario according to an embodiment of this application;
FIG. 26 is a diagram of a structure of a communication apparatus 2600 according to an embodiment of this application;
FIG. 27 is a diagram of a structure of a communication apparatus 2700 according to an embodiment of this application; and
FIG. 28 is a diagram of a structure of a communication apparatus 2800 according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. The terms "first" and "second", corresponding term numbers, and the like in this specification, the claims, and the accompanying drawings of this application are used to distinguish between similar objects, and are not necessarily used to describe a specific sequence or order. It should be understood that the terms used in such a way are interchangeable in proper circumstances, and this is merely a discrimination manner that is used when objects having a same attribute are described in embodiments of this application. In addition, the terms "include", "have" and any other variants thereof are intended to cover non-exclusive inclusion, so that a process, method, system, product, or device that includes a series of units is not necessarily limited to those units, but may include other units not expressly listed or inherent to such a process, method, system, product, or device.

In descriptions of this application, "/" means "or" unless otherwise specified. For example, A/B may indicate A or B. In this application, "and/or" describes only an association relationship between associated objects and indicates that three relationships may exist. For example, A and/or B may indicate the following three cases: Only A exists, both A and B exist, and only B exists. In addition, in the descriptions of this application, "at least one item" indicates one or more items, and "a plurality of items" indicates two or more items. "At least one of the following items (pieces)" or a similar expression thereof means any combination of these items, including a singular item (piece) or any combination of plural items (pieces). For example, at least one of a, b, or c indicates a, b, c, a and b, a and c, b and c, or a, b, and c, where a, b, and c may be singular or plural.

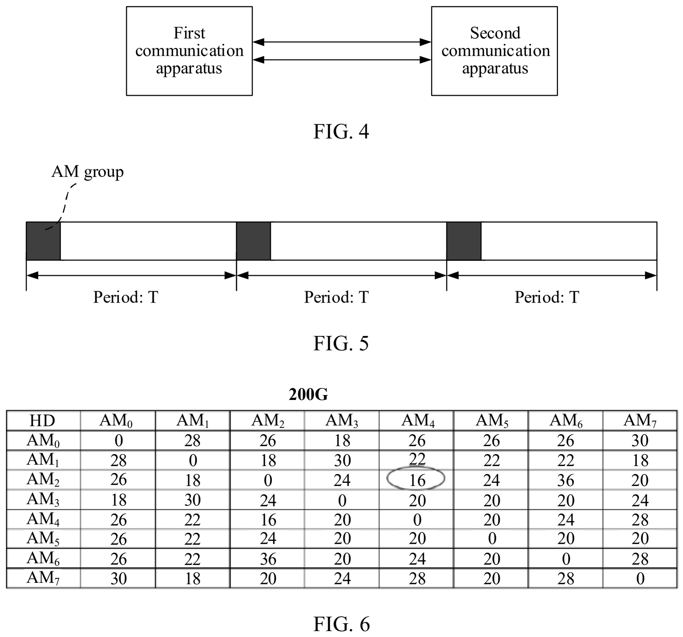

With development of networks, requirements on network traffic are increasingly high. For example, currently, there are 100G (100,000 megabits per second), 200G (200,000 megabits per second), and 400G (400,000 megabits per second) Ethernet technologies. With the development of the networks, higher requirements are imposed on Ethernet rates. As shown in FIG. 4, a diagram of a system architecture involved in embodiments of this application is illustrated. A first communication apparatus and a second communication apparatus are connected through a plurality of physical lanes, on which parallel transmission is performed, so that Ethernet rates can be improved. For example, the physical lane may be a high-speed bus, for example, a copper wire or an optical fiber. In this way, the first communication apparatus and the second communication apparatus may be electrically interconnected through copper wires. For example, for the 200G Ethernet technology, the first communication apparatus and the second communication apparatus may be connected through eight physical lanes, four physical lanes, two physical lanes, or one physical lane. For another example, for the 400G Ethernet technology, the first communication apparatus and the second communication apparatus may be connected through 16 physical lanes, eight physical lanes, four physical lanes, two physical lanes, or one physical lane. For another example, for the 100G Ethernet technology, the first communication apparatus and the second communication apparatus are connected through four physical lanes, two physical lanes, or one physical lane.

It may be understood that the first communication apparatus and the second communication apparatus may be chips, units having receiving and sending functions, or physical devices. If the first communication apparatus sends data, the second communication apparatus receives the data; if the second communication apparatus sends data, the first communication apparatus receives the data. A physical transmit lane of the first communication apparatus is in one-to-one correspondence with a physical receive lane of the second communication apparatus; and a physical transmit lane of the second communication apparatus is in one-to-one correspondence with a physical receive lane of the first communication apparatus. In embodiments of this application, an example in which the first communication apparatus is a transmitter device and the second communication apparatus is a receiver device is used for description.

Either of the first communication apparatus and the second communication apparatus includes a reconciliation sublayer (reconciliation sublayer) and an Ethernet physical layer. The Ethernet physical layer includes a physical coding sublayer (physical coding sublayer, PCS), a physical medium attachment (physical medium attachment, PMA) layer, and a physical media dependent (physical media dependent, PMD) layer. Z PCS lanes are defined at the PCS, the Z PCS lanes are in one-to-one correspondence with Z alignment markers (alignment markers, AMs), and the Z PCS lanes are virtual lanes. Z is an integer greater than 0, and Z is an integer multiple of X, for example, Z=2*X or 4*X.

There is a mapping relationship between a physical lane and a logical lane in the first communication apparatus and the second communication apparatus. For example, one physical lane corresponds to one logical lane, one physical lane corresponds to two logical lanes, or one physical lane corresponds to four logical lanes. In other words, one physical lane may carry data of one or more logical lanes.

In addition, IEEE 802.3 defines different quantities of logical lanes for Ethernet technologies of different rates. For example, a quantity of logical lanes for the 100G Ethernet technology is 4. For another example, a quantity of logical lanes for the 200G Ethernet technology is 8. For still another example, a quantity of logical lanes for the 400G Ethernet technology is 16.

In embodiments of this application, quantities of logical lanes defined for Ethernet technologies of different rates may be consistent with or different from quantities of logical lanes defined for Ethernet technologies of different rates in IEEE 802.3. For example, a quantity of logical lanes defined for the 400G Ethernet technology in IEEE802.3 is 16, and each logical lane supports a bandwidth of 25G. However, a quantity of logical lanes defined in this application for the 400G Ethernet technology is 4, and each logical lane supports a bandwidth of 100G.

It should be noted that the logical lane may be a physical coding sublayer (physical coding sublayer, PCS) lane or a forward error correction (forward error correction, FEC) lane. For example, for a 200G/400G Ethernet interface, a logical lane may be referred to as a PCS lane or an FEC lane. For another example, for a 100G Ethernet interface, a logical lane may be referred to as an FEC lane. The PCS lane and the FEC lane are typically distributed inside an implementation unit, and are referred to as logical lanes to distinguish these lanes from physical medium attachment (physical medium attachment, PMA) sublayer lanes. In this application, these lanes are also referred to as logical lanes.

When the first communication apparatus and the second communication apparatus perform data transmission through a plurality of logical lanes, to ensure that the second communication apparatus can implement locking and alignment of the logical lanes, an alignment marker (alignment marker, AM) is further designed and specified in the IEEE 802.3, to identify logical lanes. The AMs (or referred to as an AM group) are characterized by periodic transmission. For example, FIG. 5 shows AM transmission, showing that an AM is sent at intervals of T in a data stream.

The AM has a specific format. For example, in the 200G/400G Ethernet technology , the AM format is shown in FIG. 1. CM₀ to CM₅ in common markers (common markers, CMs) are common markers of a plurality of logical lanes, and UM₀ to UM₅ in unique markers (unique markers, UMs) uniquely identify a logical lane, and UP₀, UP₁, and UP₂ in unique padding (unique padding, UP) are padding bits. In other words, AMs have same CM₀, CM₁, CM₂, CM₃, CM₄, and CM₅ in all logical lanes, and any two logical lanes have different UM₀, UM₁, UM₂, UM₃, UM₄, and UM₅, and different UP₀, UP₁, and UP₂, for example, as shown in FIG. 2 and FIG. 3.

For the Ethernet rate specification "200GBASE-R PCS" and Ethernet rate specification "400GBASE-R PCS" shown in FIG. 2 and FIG. 3:

For AMs defined in "200GBASE-R PCS", bitwise XOR calculation is performed on any two AMs, to obtain a Hamming distance (Hamming distance, HD) between any two AMs, as shown in FIG. 6. FIG. 6 is a diagram of a Hamming distance between any two AMs in 200GBASE-R PCS. The Hamming distance between any two AMs in 200GBASE-R PCS is 16.

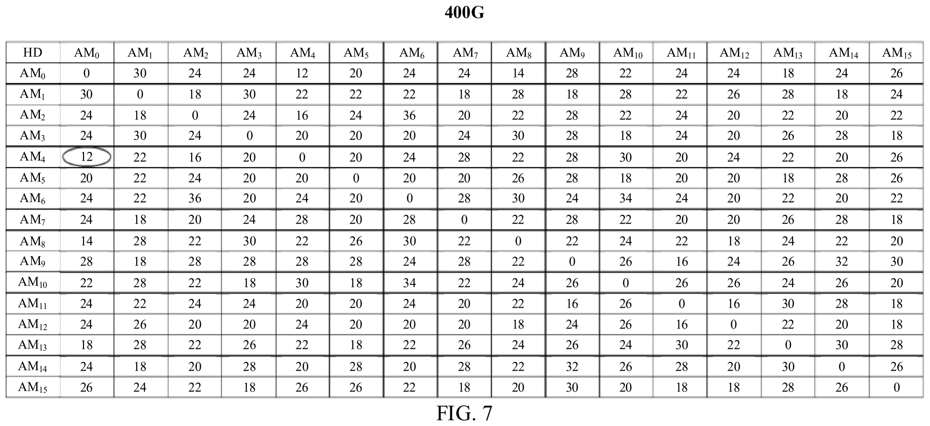

For AMs defined in "400GBASE-R PCS", bitwise XOR calculation is performed on any two AMs, to obtain a Hamming distance between any two AMs, as shown in FIG. 7. FIG. 7 is a diagram of a Hamming distance between any two AMs in 400GBASE-R PCS. A Hamming distance between any two AMs in 400GBASE-R PCS is 12. The Hamming distance indicates a quantity of different characters at corresponding positions of two character strings. The Hamming distance may represent a probability of misjudgment between two AMs. A smaller Hamming distance indicates a smaller difference between two AMs and a higher probability of misjudgment.

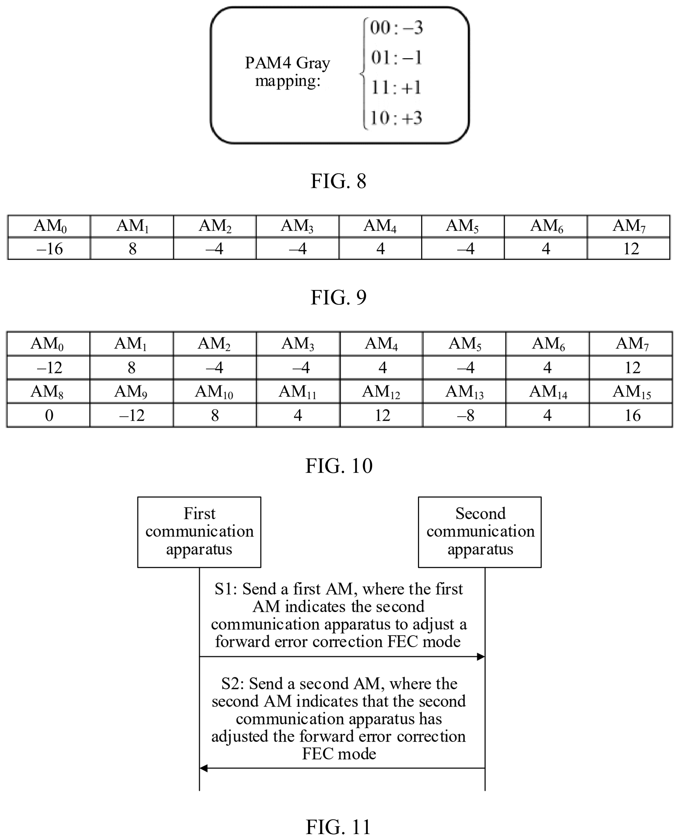

The Ethernet rate specification "200GBASE-R PCS" and "400GBASE-R PCS" specify the adoption of four-level pulse amplitude modulation (4 Pulse Amplitude Modulation, PAM4) for modulation. According to PAM4 Gray mapping (as shown in FIG. 8), direct current (Direct Current, DC) values are respectively obtained by calculating AMs defined in 200GBASE-R PCS and AMs defined in 400GBASE-R PCS. Specifically, the calculated DC values of the AMs are shown in FIG. 9 and FIG. 10. FIG. 9 is a diagram of DC values of AMs in 200GBASE-R, and FIG. 10 is a diagram of DC values of AMs in 400GBASE-R. It can be learned from FIG. 9 and FIG. 10 that the current AMs does not meet a characteristic of DC equalization.

The AM format for other Ethernet technology rates is similar to those for 200G and 400G, or may be variations derived from the 200G and 400G formats. To avoid repetition, examples are not listed one by one herein.

Through research, the applicants find that AMs inserted into data streams become functionally redundant once the transmitter and the receiver utilize the AMs to achieve inter-lane data alignment and lane number identification. Consequently, the AMs inserted into the data streams actually consume communication resources unnecessarily.

Based on this, an embodiment of this application provides an alignment marker AM-based communication method, including: A first communication apparatus sends a first alignment marker AM to a second communication apparatus, where the first AM indicates the second communication apparatus to adjust a forward error correction FEC mode. The first communication apparatus receives a second AM from the second communication apparatus, where the second AM indicates that the second communication apparatus has adjusted the FEC mode. The first communication apparatus sends the first AM to the second communication apparatus, where the first AM indicates the second communication apparatus to adjust the forward error correction FEC mode. Indication information for adjusting the forward error correction FEC mode is transferred via the AM, so that the AM is fully utilized, to implement the lossless information transfer based on the AM, thereby improving the utilization of the AM and communication efficiency without affecting existing functions of the AM.

The following describes embodiments of this application with reference to the accompanying drawings. FIG. 11 is a diagram of an embodiment of an alignment marker AM-based communication method according to an embodiment of this application. The alignment marker AM-based communication method provided in this embodiment of this application includes the following steps.

S1: A first communication apparatus sends a first AM to a second communication apparatus, where the first AM indicates the second communication apparatus to adjust a forward error correction FEC mode.

In step S1, a communication connection is established between the first communication apparatus and the second communication apparatus. After determining that there is a need to request the second communication apparatus to adjust the forward error correction FEC mode, the first communication apparatus sends the first AM to the second communication apparatus, where the first AM indicates the second communication apparatus to adjust the forward error correction FEC mode.

In a possible implementation, the first communication apparatus determines, by detecting data transmitted between the first communication apparatus and the second communication apparatus, whether to request the second communication apparatus to adjust the FEC mode (or request the second communication apparatus on how to adjust the FEC mode). If a bit error rate of the data reaches a threshold, the first communication apparatus determines that there is a need to request the second communication apparatus to adjust the FEC mode.

For example, if a bit error rate of the data transmitted between the first communication apparatus and the second communication apparatus is greater than a first threshold, the first communication apparatus considers that the bit error rate of the data is high, and needs to request the second communication apparatus to upgrade the FEC mode to compensate for or correct bit errors of the data.

For another example, if a bit error rate of the data transmitted between the first communication apparatus and the second communication apparatus is less than a second threshold, the first communication apparatus considers that the bit error rate of the data is low, and the second communication apparatus may downgrade the FEC mode to reduce power consumption. In addition, after the second communication apparatus downgrades the FEC mode, normal communication between the second communication apparatus and the first communication apparatus can still be ensured. The first communication apparatus needs to request the second communication apparatus to downgrade the FEC mode.

In another possible implementation, the first communication apparatus may alternatively determine to send the first AM to the second communication apparatus according to an instruction (where the instruction may be delivered by a user, or delivered by a third-party platform, for example, delivered by a network manager or a management platform that manages the first communication apparatus).

The following describes the first AM.

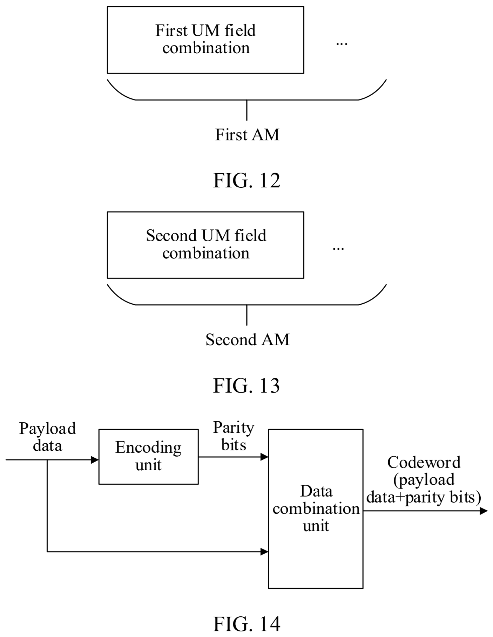

In a possible implementation, FIG. 12 is a diagram of a structure of a first AM according to an embodiment of this application. The first AM includes a first unique marker UM field combination, the first UM field combination includes a plurality of unique marker UM fields, and the first UM field combination indicates the second communication apparatus to adjust the FEC mode.

Specifically, the first UM field combination is formed by a codeword included in a first codeword set, and the first codeword set includes a plurality of codewords. The codeword specifically includes payload data and parity bits. For ease of understanding, refer to FIG. 14. FIG. 14 is a diagram of an encoding procedure according to an embodiment of this application. Parity bits are obtained by encoding payload data by an encoding unit. Then, a data combination unit outputs a codeword (codeword, CW) based on the parity bits and the payload data, where the codeword includes the payload data and the parity bits.

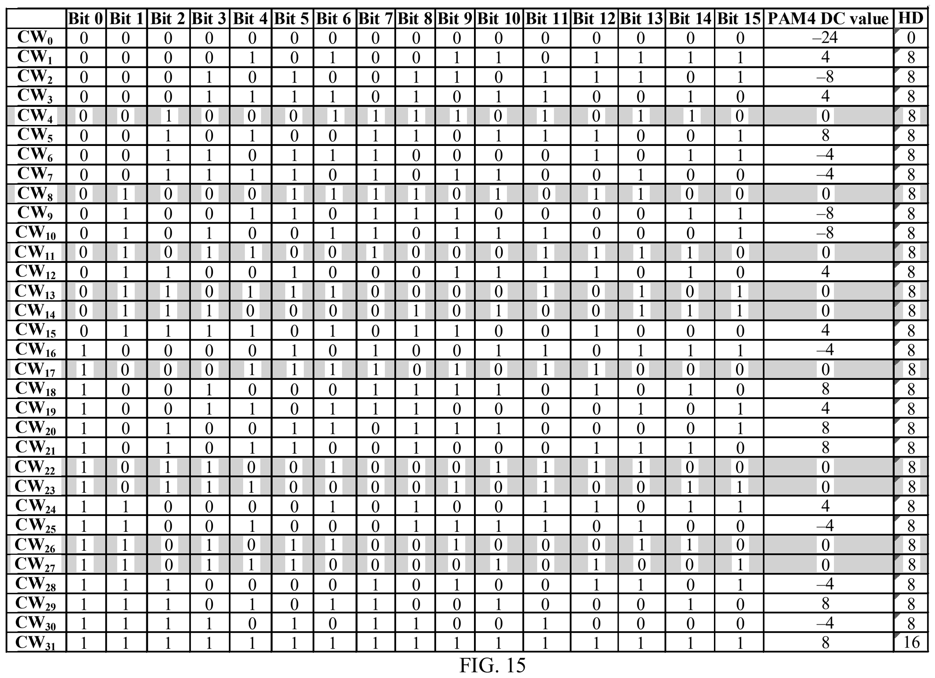

In a possible implementation, the codeword included in the first codeword set is formed by 5-bit payload data and 11 parity bits, and the parity bits are obtained by encoding the payload data using an extended Bose-Chaudhuri-Hocquenghem eBCH (16, 5) encoding scheme. Specifically, the first codeword set is shown in FIG. 15. FIG. 15 is a diagram of a first codeword set according to an embodiment of this application. It can be learned from FIG. 15 that 11 parity bits are output by using 5-bit payload data in an eBCH (16, 5) encoding scheme, and then the 5-bit payload data and 11-bit parity data form 32 codeword combinations (CW₀ to CW₃₁) in total. The 32 codeword combinations jointly form the first codeword set.

Further, optionally, the first codeword set may include a codeword that meets DC equalization. If the codeword included in the first codeword set is formed by 5-bit payload data and 11 parity bits, the parity bits are obtained by encoding the payload data using an eBCH (16,5) encoding scheme. The first codeword set includes any one or more of the following codewords:
0 0 1 0 0 0 1 1 1 1 0 1 0 1 1 0,
0 1 0 0 0 1 1 1 1 0 1 0 1 1 0 0,
0 1 0 1 1 0 0 1 0 0 0 1 1 1 1 0,
0 1 1 0 1 1 1 0 0 0 0 1 0 1 0 1,
0 1 1 1 0 0 0 0 1 0 1 0 0 1 1 1,
1000111101011000,
1 0 1 1 0 0 1 0 0 0 1 1 1 1 0 0,
1 0 1 1 1 0 0 0 0 1 0 1 0 0 1 1,
1 1 0 1 0 1 1 0 0 1 0 0 0 1 1 0, or
1101110000101001.

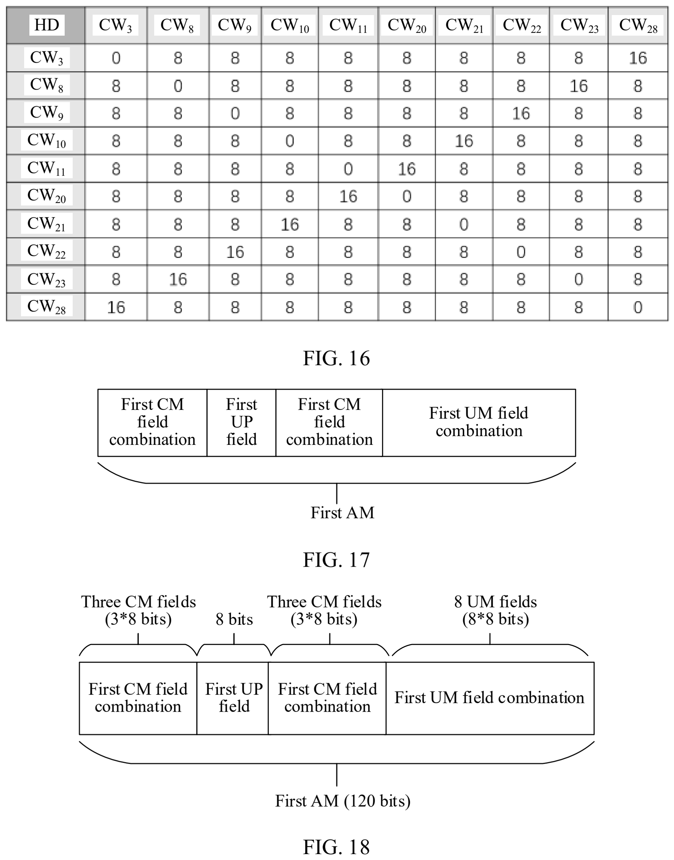

With reference to the codewords shown in FIG. 15, the codewords included in the first codeword set are CW₄, CW₈, CW₁₁, CW₁₃, CW₁₄, CW₁₇, CW₂₂, CW₂₃, CW₂₆, and CW₂₇. For the codewords included in the first codeword set, a Hamming distance is shown in FIG. 16. FIG. 16 is a diagram of a Hamming distance for a first codeword set according to an embodiment of this application. It can be learned from FIG. 16 that, when codewords included in the first codeword set are CW₄, CW₈, CW₁₁, CW₁₃, CW₁₄, CW₁₇, CW₂₂, CW₂₃, CW₂₆, and CW₂₇, a minimum Hamming distance between any two codewords in the first codeword set is 8. Therefore, a first UM field combination using the first codeword set meets a characteristic of network non-return-to-zero (non-return-to-zero, NRZ) & PAM4 modulation DC equalization, and a larger Hamming distance between UM fields indicates easier error correction performed on the UM fields. Further, a first AM including the first UM field combination meets the characteristic of DC equalization, and a larger Hamming distance between first AMs indicates easier error correction performed on the first AMs.

It should be noted that, in this embodiment of this application, for the first codeword set, the parity bits may alternatively be obtained in another encoding scheme, including but not limited to eBCH (16, 4), eBCH (16, 6), eBCH (16, 7), or the like. A bit length of payload data of a codeword in the first codeword set is not limited, and a bit length of parity bits of a codeword in the first codeword set is not limited.

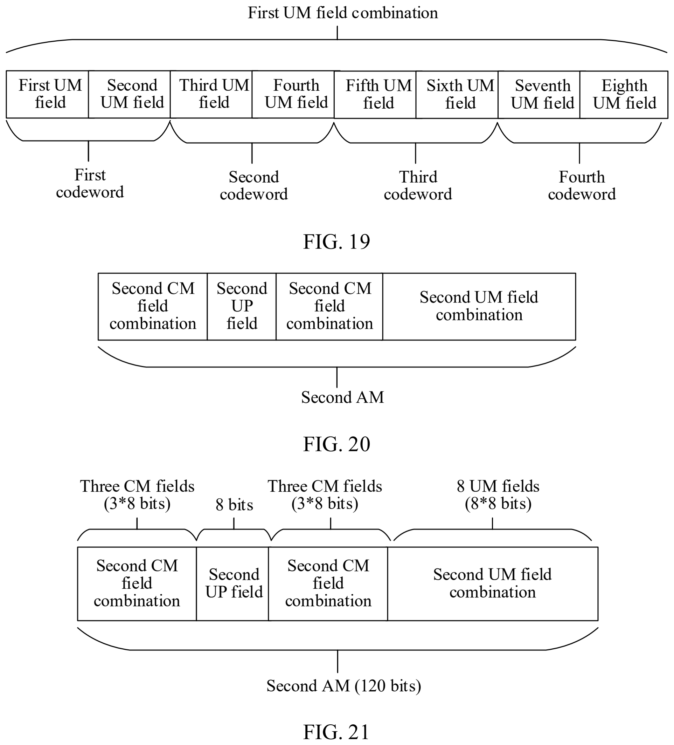

For ease of understanding, refer to FIG. 19. FIG. 19 is a diagram of another structure of a first UM field combination according to an embodiment of this application. For the first UM field combination, optionally, the first UM field combination includes eight UM fields, and the first UM field combination includes a first UM field, a second UM field, a third UM field, a fourth UM field, a fifth UM field, a sixth UM field, a seventh UM field, and an eighth UM field. The first UM field and the second UM field are formed by a first codeword, the third UM field and the fourth UM field are formed by a second codeword, the fifth UM field and the sixth UM field are formed by a third codeword, and the seventh UM field and the eighth UM field are formed by a fourth codeword. The first codeword, the second codeword, the third codeword, and the fourth codeword belong to the first codeword set.

Optionally, a length of each UM field is eight bits.

A possible example is as follows. With reference to the first codeword set shown in FIG. 15, the first UM field combination is shown in Table 1.

**Table 1**

| {UM₀, UM₁} (first UM field, second UM field) | {UM₂, UM₃} (third UM field, fourth UM field) | {UM₄, UM₅} (fifth UM field, sixth UM field) | {UM₆, UM₇} (seventh UM field, eighth UM field) |
|---|---|---|---|
| CW₄ (for details, refer to FIG. 15) | CW₄ | CW₄ | CW₄ |
| CW₈ (for details, refer to FIG. 15) | CW₈ | CW₈ | CW₈ |
| CW₁₁ (for details, refer to FIG. 15) | CW₁₁ | CW₁₁ | CW₁₁ |
| CW₁₃ (for details, refer to FIG. 15) | CW₁₃ | CW₁₃ | CW₁₃ |
| CW₁₄ (for details, refer to FIG. 15) | CW₁₄ | CW₁₄ | CW₁₄ |
| CW₁₇ (for details, refer to FIG. 15) | CW₁₇ | CW₁₇ | CW₁₇ |
| CW₂₂ (for details, refer to FIG. 15) | CW₂₂ | CW₂₂ | CW₂₂ |
| CW₂₃ (for details, refer to FIG. 15) | CW₂₃ | CW₂₃ | CW₂₃ |
| CW₂₆ (for details, refer to FIG. 15) | CW₂₆ | CW₂₆ | CW₂₆ |
| CW₂₇ (for details, refer to FIG. 15) | CW₂₇ | CW₂₇ | CW₂₇ |

With reference to Table 1, different UM fields in the first UM field combination may use different codewords. For example, the first UM field and the second UM field use CW₄, the third UM field and the fourth UM field use CW₈, the fifth UM field and the sixth UM field use CW₁₄, and the seventh UM field and the eighth UM field use CW₂₂. Different UM fields in the first UM field combination may alternatively use a same codeword. For example, the first UM field and the second UM field use CW₄, the third UM field and the fourth UM field use _{CW4}, the fifth UM field and the sixth UM field use CW₄, and the seventh UM field and the eighth UM field use CW₄.

Further, adjusting the FEC mode specifically includes: upgrading a type of the FEC mode, or downgrading the type of the FEC mode. Therefore, the first UM field combination indicates the second communication apparatus to upgrade the type of the FEC mode, or the first UM field combination indicates the second communication apparatus to downgrade the type of the FEC mode. For example, a codeword #1 is used when the first UM field combination indicates the second communication apparatus to upgrade the type of the FEC mode, and a codeword #2 is used when the first UM field combination indicates the second communication apparatus to downgrade the type of the FEC mode. The codeword #1 is inconsistent with the codeword #2. The second communication apparatus determines, based on the codeword used by the first UM field combination, that the first UM field combination specifically indicates the second communication apparatus to upgrade the type of the FEC mode, or determines that the first UM field combination specifically indicates the second communication apparatus to downgrade the type of the FEC mode.

In a possible example, refer to the first codeword set shown in FIG. 15. The first UM field combination uses the codeword CW₄, and the first UM field combination indicates the second communication apparatus to upgrade the type of the FEC mode; or the first UM field combination uses the codeword CW₈, and the first UM field combination indicates the second communication apparatus to downgrade the type of the FEC mode.

Further, optionally, a type of each FEC mode uniquely corresponds to one codeword combination. The first AM indicates, by using the codeword included in the first UM field combination, the second communication apparatus to adjust the type of the FEC mode, with reference to FIG. 15, for example, as shown in Table 2.

**Table 2**

| Codeword combination | Type of an FEC mode (FEC type) |
|---|---|
| CW₈ (for details, refer to FIG. 15) | FEC type 1 |
| CW₁₁ (for details, refer to FIG. 15) | FEC type 2 |
| CW₁₃ (for details, refer to FIG. 15) | FEC type 3 |
| CW₁₇ (for details, refer to FIG. 15) | FEC type 4 |
| CW₂₂ (for details, refer to FIG. 15) | FEC type 5 |
| CW₂₃ (for details, refer to FIG. 15) | FEC type 6 |

Descriptions are provided with reference to Table 2. When the first UM field combination in the first AM uses the codeword CW₁₃, the first AM indicates the second communication apparatus to adjust the FEC mode to the FEC type 3; and the second communication apparatus adjusts the type of the FEC mode of the second communication apparatus to the FEC type 3 in response to the first AM. When the first UM field combination in the first AM uses the codeword CW₂₂, the first AM indicates the second communication apparatus to adjust the FEC mode to the FEC type 5; and the second communication apparatus adjusts the type of the FEC mode of the second communication apparatus to the FEC type 5 in response to the first AM. The rest is deduced by analogy.

Further, in addition to the first UM field combination, the first AM further includes a first common marker CM field combination and a first unique pad UP field. A possible structure of a first AM is shown in FIG. 17. FIG. 17 is a diagram of another structure of a first AM according to an embodiment of this application. First CM field combinations are separated by a first UP field.

Optionally, a length of the first AM is 120 bits, to be compatible with current standard Ethernet protocols.

Optionally, the first CM field combination includes six CM fields, each having a length of eight bits.

Optionally, the six CM fields included in the first CM field combination are evenly separated by the first UP field, and a length of the first UP field is eight bits.

It may be understood that the first UP field may be replaced with another field. This is not limited in embodiments of this application.

For ease of understanding, refer to FIG. 18. FIG. 18 is a diagram of still another structure of a first AM according to an embodiment of this application. A first CM field combination includes six 8-bit CM fields in total, which are separated by one 8-bit first UP field from the middle. The first CM field combination is followed by a first UM field combination, and the first UM field combination includes eight 8-bit UM fields. The foregoing structure is used to improve utilization of the fields in the first AM. In addition, a length of the first AM is 120 bits, to be compatible with the current standard Ethernet protocol.

Optionally, a selectable character string of the first UP field is shown in Table 3.

**Table 3**

| |
|---|
| 0x1E |
| 0x2D |
| 0x4B |
| 0x78 |
| 0x87 |
| 0xB4 |
| 0xD2 |
| 0x87 |
| 0xE1 |

It may be understood that the first AM may alternatively use another structure. This is not limited in embodiments of this application.

S2: The second communication apparatus sends a second AM to the first communication apparatus, where the second AM indicates that the second communication apparatus has adjusted the forward error correction FEC mode.

In step S2, after receiving the first AM from the first communication apparatus, the second communication apparatus determines, based on the first AM, that the FEC mode needs to be adjusted. Then, the second communication apparatus adjusts the FEC mode of the second communication apparatus based on the first AM. After the second communication apparatus completes the adjustment of the FEC mode, and before a new FEC mode takes effect (or before the new FEC mode is used for communication), the second communication apparatus sends the second AM to the first communication apparatus. The second AM indicates that the second communication apparatus has adjusted the FEC mode, so that the first communication apparatus learns, based on the second AM, that the second communication apparatus is to perform communication with the new FEC mode, and prepares for the communication in advance.

The following describes the second AM.

In a possible implementation, FIG. 13 is a diagram of a structure of a second AM according to an embodiment of this application. The second AM includes a first unique marker UM field combination, the second UM field combination includes a plurality of unique marker UM fields, and the second UM field combination indicates that the second communication apparatus has adjusted the FEC mode.

Specifically, the second UM field combination is formed by a codeword included in a first codeword set, and the first codeword set includes a plurality of codewords. The codeword specifically includes payload data and parity bits. For ease of understanding, refer to FIG. 14. FIG. 14 is a diagram of an encoding procedure according to an embodiment of this application. Parity bits are obtained by encoding payload data by an encoding unit. Then, a data combination unit outputs a codeword (codeword, CW) based on the parity bits and the payload data, where the codeword includes the payload data and the parity bits.

In a possible implementation, the codeword included in the first codeword set is formed by 5-bit payload data and 11 parity bits, and the parity bits are obtained by encoding the payload data using an extended Bose-Chaudhuri-Hocquenghem eBCH (16, 5) encoding scheme. Specifically, the first codeword set is shown in FIG. 15. FIG. 15 is a diagram of a first codeword set according to an embodiment of this application. It can be learned from FIG. 15 that 11 parity bits are output by using 5-bit payload data in an eBCH (16, 5) encoding scheme, and then the 5-bit payload data and 11-bit parity data form 32 codeword combinations (CW₀ to CW₃₁) in total. The 32 codeword combinations jointly form the first codeword set.

Further, optionally, the first codeword set may include a codeword that meets DC equalization. If the codeword included in the first codeword set is formed by 5-bit payload data and 11 parity bits, the parity bits are obtained by encoding the payload data in an eBCH (16,5) encoding scheme. The first codeword set includes any one or more of the following codewords:
0 0 1 0 0 0 1 1 1 1 0 1 0 1 1 0,
0 1 0 0 0 1 1 1 1 0 1 0 1 1 0 0,
0 1 0 1 1 0 0 1 0 0 0 1 1 1 1 0,
0 1 1 0 1 1 1 0 0 0 0 1 0 1 0 1,
0 1 1 1 0 0 0 0 1 0 1 0 0 1 1 1,
1000111101011000,
1 0 1 1 0 0 1 0 0 0 1 1 1 1 0 0,
1 0 1 1 1 0 0 0 0 1 0 1 0 0 1 1,
1 1 0 1 0 1 1 0 0 1 0 0 0 1 1 0, or
1101110000101001.

With reference to the codewords shown in FIG. 15, the codewords included in the first codeword set are CW₄, CW₈, CW₁₁, CW₁₃, CW₁₄, CW₁₇, CW₂₂, CW₂₃, CW₂₆, and CW₂₇. For the codewords included in the first codeword set, a Hamming distance is shown in FIG. 16. FIG. 16 is a diagram of a Hamming distance for a first codeword set according to an embodiment of this application. It can be learned from FIG. 16 that, when codewords included in the first codeword set are CW₄, CW₈, CW₁₁, CW₁₃, CW₁₄, CW₁₇, CW₂₂, CW₂₃, CW₂₆, and CW₂₇, a minimum Hamming distance between any two codewords in the first codeword set is 8. Therefore, a second UM field combination using the first codeword set meets a characteristic of network non-return-to-zero (non-return-to-zero, NRZ) & PAM4 modulation DC equalization, and a larger Hamming distance between UM fields indicates easier error correction performed on the UM fields. Further, a second AM including the second UM field combination meets the characteristic of the DC equalization, and a larger Hamming distance between second AMs indicates easier error correction performed on the second AMs.

It should be noted that in this embodiment of this application, for the first codeword set, the parity bits may alternatively be obtained in another encoding scheme. A bit length of payload data of a codeword in the first codeword set is not limited, and a bit length of parity bits of a codeword in the first codeword set is not limited.

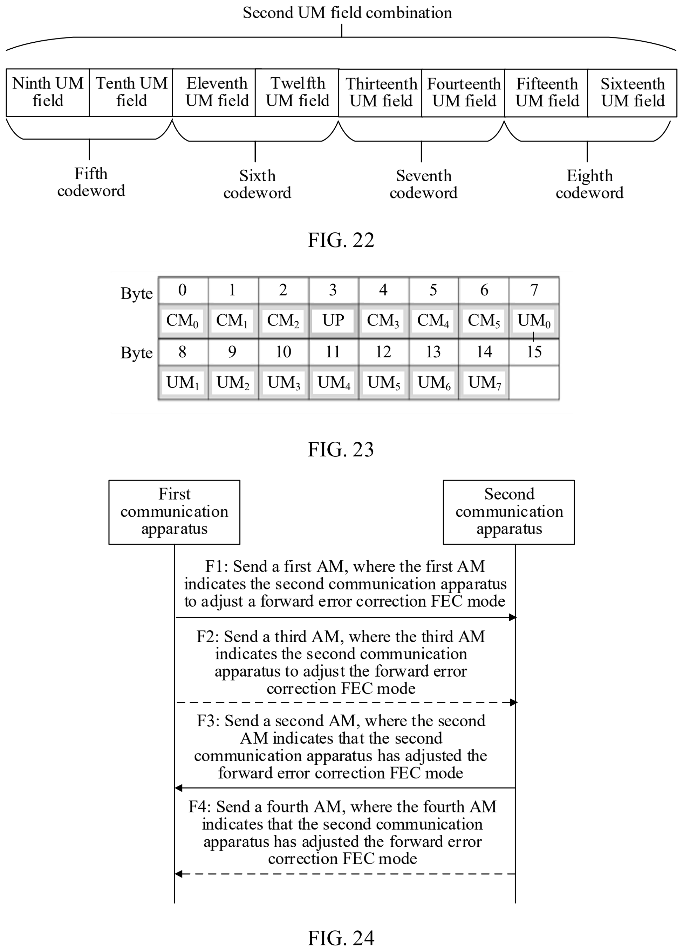

For ease of understanding, refer to FIG. 22. FIG. 22 is a diagram of another structure of a second UM field combination according to an embodiment of this application. For the second UM field combination, optionally, the second UM field combination includes 8 UM fields, and the second UM field combination includes a ninth UM field, a tenth UM field, an eleventh UM field, a twelfth UM field, a thirteenth UM field, a fourteenth UM field, a fifteenth UM field, and a sixteenth UM field. The ninth UM field and the tenth UM field are formed by a fifth codeword, the eleventh UM field and the twelfth UM field are formed by a sixth codeword, the thirteenth UM field and the fourteenth UM field are formed by a seventh codeword, and the fifteenth UM field and the sixteenth UM field are formed by an eighth codeword. The fifth codeword, the sixth codeword, the seventh codeword, and the eighth codeword belong to the first codeword set.

Optionally, a length of each UM field is eight bits.

A possible example is as follows: With reference to the first codeword set shown in FIG. 15, the second UM field combination is shown in Table 4.

**Table 4**

| {UM₀, UM₁} (ninth UM field, second UM field) | {UM₂, UM₃} (eleventh UM field and twelfth UM field) | {UM₄, UM₅} (thirteenth UM field and fourteenth UM field) | {UM₆, UM₇} (fifteenth UM field, sixteenth UM field) |
|---|---|---|---|
| CW₄ (for details, refer to FIG. 15) | CW₄ | CW₄ | CW₄ |
| CW₈ | CW₈ | CW₈ | CW₈ |
| CW₁₁ | CW₁₁ | CW₁₁ | CW₁₁ |
| CW₁₃ | CW₁₃ | CW₁₃ | CW₁₃ |
| CW₁₄ | CW₁₄ | CW₁₄ | CW₁₄ |
| CW₁₇ | CW₁₇ | CW₁₇ | CW₁₇ |
| CW₂₂ | CW₂₂ | CW₂₂ | CW₂₂ |
| CW₂₃ | CW₂₃ | CW₂₃ | CW₂₃ |
| CW₂₆ | CW₂₆ | CW₂₆ | CW₂₆ |
| CW₂₇ | CW₂₇ | CW₂₇ | CW₂₇ |

With reference to Table 4, different UM fields in the second UM field combination may use different codewords. For example, the ninth UM field and the tenth UM field use CW₄, the eleventh UM field and the twelfth UM field use CW₈, the thirteenth UM field and the fourteenth UM field use CW₁₄, and the fifteenth UM field and the sixteenth UM field use CW₂₂. Different UM fields in the second UM field combination may alternatively use a same codeword. For example, the ninth UM field and the tenth UM field use CW₄, the eleventh UM field and the twelfth UM field use CW₄, the thirteenth UM field and the fourteenth UM field use CW₄, and the fifteenth UM field and the sixteenth UM field use CW₄.

Further, adjusting the FEC mode specifically includes: upgrading a type of the FEC mode, or downgrading the type of the FEC mode. Therefore, the second UM field combination indicates that the second communication apparatus has upgraded the type of the FEC mode, or the second UM field combination indicates that the second communication apparatus has downgraded the type of the FEC mode. For example, a codeword #3 is used when the second UM field combination indicates that the second communication apparatus has upgraded to the type of the FEC mode, and a codeword #4 is used when the second UM field combination indicates that the second communication apparatus has downgraded to the type of the FEC mode. The codeword #3 is inconsistent with the codeword #4. The first communication apparatus determines, based on the codeword used by the second UM field combination, that the second UM field combination specifically indicates that the second communication apparatus has upgraded to the type of the FEC mode, or determines that the second UM field combination specifically indicates that the second communication apparatus has downgraded to the type of the FEC mode.

In a possible example, refer to the first codeword set shown in FIG. 15. The second UM field combination uses the codeword CW₁₁, and the second UM field combination indicates that the second communication apparatus has upgraded the type of an FEC mode; or the second UM field combination uses the codeword CW₁₄, and the second UM field combination indicates that the second communication apparatus has downgraded the type of an FEC mode.

Further, in addition to the second UM field combination, the second AM further includes a second common marker CM field combination and a second unique pad UP field. A possible structure of a second AM is shown in FIG. 20. FIG. 20 is a diagram of another structure of a second AM according to an embodiment of this application. Second CM field combinations are separated by a second UP field.

Optionally, a length of the second AM is 120 bits, to be compatible with the current standard Ethernet protocol.

Optionally, the second CM field combination includes six CM fields, each having a length of eight bits.

Optionally, the six CM fields included in the second CM field combination are evenly separated by the second UP field, and a length of the second UP field is eight bits.

For ease of understanding, refer to FIG. 21. FIG. 21 is a diagram of still another structure of a second AM according to an embodiment of this application. A second CM field combination includes six 8-bit CM fields in total, which are separated by one 8-bit second UP field from the middle. The second CM field combination is followed by a second UM field combination, and the second UM field combination includes eight 8-bit UM fields. The foregoing structure is used to improve utilization of the fields in the second AM. In addition, a length of the second AM is 120 bits, to be compatible with the current standard Ethernet protocol.

Optionally, a selectable character string of the second UP field is shown in Table 5.

**Table 5**

| |
|---|
| 0x1E |
| 0x2D |
| 0x4B |
| 0x78 |
| 0x87 |
| 0xB4 |
| 0xD2 |
| 0x87 |
| 0xE1 |

It may be understood that the second AM may alternatively use another structure. This is not limited in embodiments of this application.

It may be understood that the second UP field may be replaced with another field. This is not limited in embodiments of this application.

For the first AM in step S1 and the second AM in step S2, a possible example is shown in FIG. 23. FIG. 23 is a diagram of a structure of an alignment marker according to an embodiment of this application. The AM (for example, the first AM or the second AM) includes a CM field combination, a UP field, and a UM field combination. The CM field combination includes CM₀, CM₁, CM₂, CM₃, CM₄, and CM₃, and a length of each CM field (for example, CM₁) is eight bits (one byte); a length of the UP field is eight bits; and the UM field combination includes UM₀, UM₁, UM₂, UM₃, UM₄, UM₅, UM₆, and UM₇, each having a length of eight bits. A total length of the AM is 120 bits.

After step S2, the second communication apparatus adjusts the FEC mode in response to the first AM, and then communicates with the first communication apparatus using an adjusted FEC mode.

In the foregoing embodiments, the first communication apparatus is used as a request initiator for the FEC mode adjustment, and the second communication apparatus is used as a request receiver for the FEC mode adjustment. That is, the first communication apparatus and the second communication apparatus operate in a simplex mode. It may be understood that, in addition to serving as the request initiator for the FEC mode adjustment, the first communication apparatus may also serve as the request receiver for the FEC mode adjustment; and in addition to serving as the request receiver for the FEC mode adjustment, the second communication apparatus may also serve as the request initiator for the FEC mode adjustment. That is, the first communication apparatus and the second communication apparatus operate in a duplex mode. This is not limited in embodiments of this application.

In embodiments of this application, the first communication apparatus sends the first AM to the second communication apparatus, where the first AM indicates the second communication apparatus to adjust the forward error correction FEC mode. Indication information for adjusting the forward error correction FEC mode is transferred via the AM, so that the AM is fully utilized, to implement the lossless information transfer based on the AM, thereby improving the utilization of the AM and communication efficiency without affecting existing functions of the AM.

With reference to the foregoing embodiments, to further improve accuracy of the FEC mode adjustment and reduce a false identification probability of the FEC mode adjustment, refer to FIG. 24. FIG. 24 is a diagram of an embodiment of an alignment marker AM-based communication method according to an embodiment of this application. The alignment marker AM-based communication method provided in this embodiment of this application further includes the following steps.

F1: Send a first AM, where the first AM indicates a second communication apparatus to adjust a forward error correction FEC mode.

Step F1 is consistent with the foregoing step S1, and details are not described herein again.

F2: Send a third AM, where the third AM indicates the second communication apparatus to adjust the forward error correction FEC mode.

In step F2, after sending the first AM, the first communication apparatus may further send the third AM to the second communication apparatus, where the third AM indicates the second communication apparatus to adjust the FEC mode.

The third AM is similar to the first AM in step S1, and details are not described herein again.

Optionally, to help the second communication apparatus distinguish between the first AM and the third AM, a UM field combination included in the third AM and a first UM field combination included in the first AM may use different codewords. For example, with reference to the first codeword set shown in FIG. 15, the first UM field combination included in the first AM uses CW₁₄, and the UM field included in the third AM uses CW₁₇.

Optionally, after sending the first AM at a first moment, the first communication apparatus sends the third AM in a next AM sending time window after the first moment.

Step F3 is performed after step F2.

F3: Send a second AM, where the second AM indicates that the second communication apparatus has adjusted the forward error correction FEC mode.

Step F3 is consistent with the foregoing step S2, and details are not described herein again.

F4: Send a fourth AM, where the fourth AM indicates that the second communication apparatus has adjusted the adjusted forward error correction FEC mode.

In step F4, after sending the second AM, the second communication apparatus may further send the fourth AM to the first communication apparatus, where the fourth AM indicates that the second communication apparatus has adjusted the FEC mode.

The fourth AM is similar to the second AM in step S2, and details are not described herein again.

Optionally, to help the first communication apparatus distinguish between the second AM and the fourth AM, a UM field combination included in the fourth AM and a second UM field combination included in the second AM may use different codewords. For example, with reference to the first codeword set shown in FIG. 15, the second UM field combination included in the second AM uses CW₁₄, and the UM field included in the third AM uses CW₁₇.

Optionally, after sending the second AM at a second moment, the second communication apparatus sends the fourth AM in a next AM sending time window after the second moment.

In this embodiment of this application, two consecutive request messages for requesting to adjust the FEC mode and two consecutive response messages confirming the adjustment of the FEC mode are used, to prevent mis-identification of the FEC mode adjustment over a long period of time, and improve accuracy of the FEC mode adjustment.

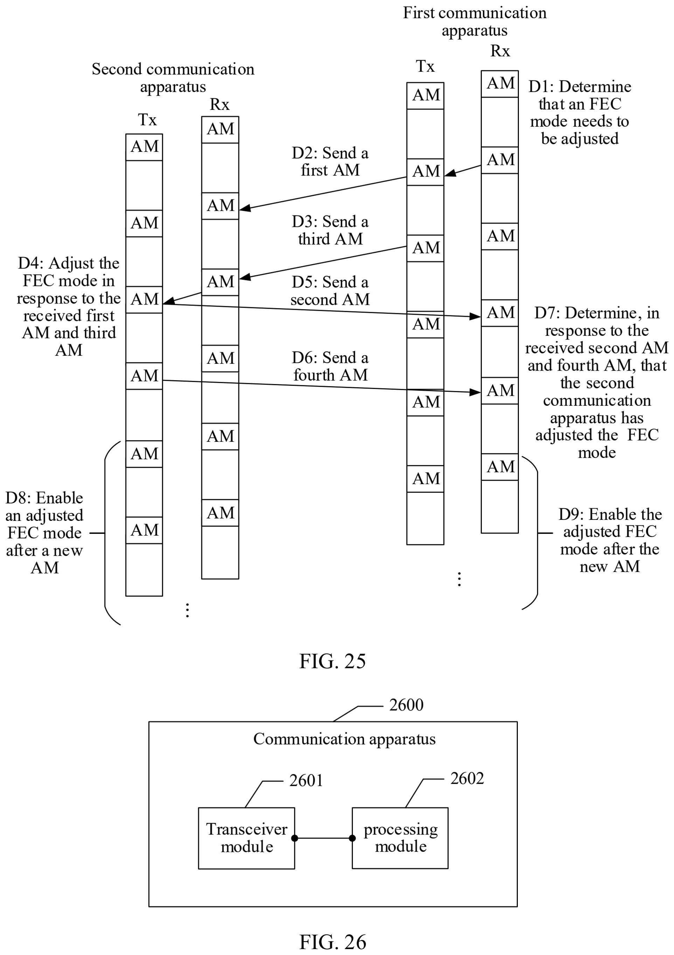

With reference to the foregoing embodiments, the following describes an application scenario provided in an embodiment of this application. FIG. 25 is a diagram of an application scenario according to an embodiment of this application. An application scenario provided in this embodiment of this application includes the following steps.

D1: A first communication apparatus determines that an FEC mode needs to be adjusted.

D2: The first communication apparatus sends a first AM to a second communication apparatus, where the first AM indicates the second communication apparatus to adjust the FEC mode.

D3: The first communication apparatus sends a third AM to the second communication apparatus within a next AM transmission period (namely, a next period in which the AM is inserted into a data stream) after the first AM is sent, where the third AM indicates the second communication apparatus to adjust the FEC mode.

D4: The second communication apparatus determines, in response to the received first AM and third AM, that the FEC mode of the second communication apparatus needs to be adjusted. Specifically, after a next AM transmission period after a fourth AM is sent, the second communication apparatus communicates with the first communication apparatus with an adjusted FEC mode.

D5: After determining, in response to the first AM and the third AM, that the FEC mode needs to be adjusted, the second communication apparatus notifies, via an AM, the first communication apparatus that the FEC mode is to be adjusted. Specifically, the second communication apparatus sends a second AM to the first communication apparatus, where the second AM indicates that the second communication apparatus has adjusted the FEC mode.

D6: The second communication apparatus sends the fourth AM to the first communication apparatus within a next AM transmission period after the second AM is sent, where the fourth AM indicates that the second communication apparatus has adjusted the FEC mode.

D7: The first communication apparatus determines, in response to the received second AM and fourth AM, that the second communication apparatus has adjusted the FEC mode.

D8: The second communication apparatus enables an adjusted FEC mode after a new AM period.

After step D4, in step D8, the second communication apparatus enables the adjusted FEC mode to communicate with the first communication apparatus after a next AM transmission period of the second communication apparatus, that is, starting from the 2^{nd} period in which the AM is inserted into a data stream after step D4.

D9: The first communication apparatus enables the adjusted FEC mode after the new AM period.

After step D7, in step D9, after a next AM reception period of the first communication apparatus (namely, a next period in which an AM is extracted from a data stream), the first communication apparatus determines that the second communication apparatus enables the adjusted FEC mode. Therefore, the first communication apparatus communicates with the second communication apparatus with the adjusted FEC mode.

The following describes a communication apparatus in embodiments of this application. The communication apparatus described below has any function of the first communication apparatus or the second communication apparatus in the foregoing method embodiments.

FIG. 26 is a diagram of a structure of a communication apparatus 2600 according to an embodiment of this application. As shown in FIG. 26, the communication apparatus 2600 includes a transceiver module 2601 and a processing module 2602.

The communication apparatus 2600 may correspond to the first communication apparatus or the second communication apparatus in the foregoing method embodiments, and the units in the communication apparatus 2600 and the foregoing other operations and/or functions are separately used to implement various steps and methods implemented by the first communication apparatus or the second communication apparatus in the method embodiments. For specific details, refer to the foregoing method embodiments. For brevity, details are not described herein again.

When the communication apparatus 2600 performs the foregoing method embodiments, division of the foregoing functional modules is merely used as an example for description. During actual application, the foregoing functions may be allocated to different functional modules for completion based on a requirement. That is, an internal structure of the communication apparatus 2600 is divided into different functional modules, to complete all or some of the functions described above. In addition, the communication apparatus 2600 provided in the foregoing embodiment and the method embodiments corresponding to FIG. 11 to FIG. 25 belong to a same concept. For specific implementation processes thereof, refer to the foregoing method embodiments. Details are not described herein again.

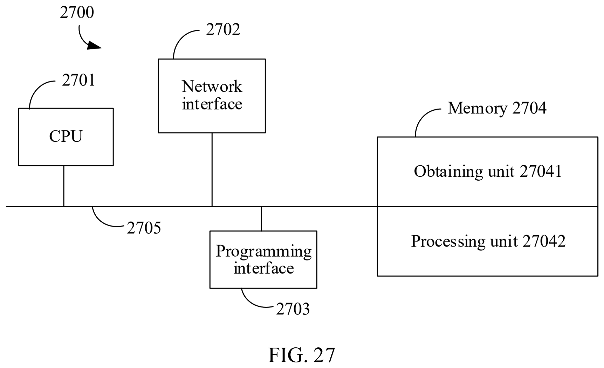

To implement the foregoing embodiments, this application further provides a communication apparatus. FIG. 27 is a diagram of a structure of a communication apparatus 2700 according to an embodiment of this application.

Although some specific features are shown in the communication apparatus 2700 shown in FIG. 27, a person skilled in the art may be aware from embodiments of this application that, for brevity, FIG. 27 does not show various other features, to avoid confusing more related aspects of the implementations disclosed in embodiments of this application. Therefore, for example, in some implementations, the communication apparatus 2700 includes one or more processing units (for example, a CPU) 2701, a network interface 2702, a programming interface 2703, a memory 2704, and one or more communication buses 2705 configured to interconnect various components. In some other implementations, some functional components or units may be omitted in or added to the communication apparatus 2700 based on the foregoing example.

In some implementations, the network interface 2702 is configured to connect to one or more other communication apparatuses/servers in a network system. In some implementations, the communication bus 2705 includes a circuit that interconnects and controls communication between system components. The memory 2704 may include a non-volatile memory, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The memory 2704 may alternatively include a volatile memory. The volatile memory may be a random access memory (random access memory, RAM), and is used as an external cache.

In some implementations, a non-transitory computer-readable storage medium of the memory 2704 or the memory 2704 stores the following programs, modules, and data structures, or a subset thereof, for example, includes a transceiver unit (not shown in the figure), an obtaining unit 27041, and a processing unit 27042.

In a possible embodiment, the communication apparatus 2700 may have any function of the first communication apparatus or the second communication apparatus in the method embodiments corresponding to FIG. 11 to FIG. 25.

It should be understood that the communication apparatus 2700 corresponds to the first communication apparatus or the second communication apparatus in the foregoing method embodiments, and modules in the communication apparatus 2700 and the foregoing other operations and/or functions are separately used to implement various steps and methods implemented by the first communication apparatus or the second communication apparatus in the foregoing method embodiments. For specific details, refer to the foregoing method embodiments corresponding to FIG. 11 to FIG. 25. For brevity, details are not described herein again.

It should be understood that, in this application, the network interface 2702 of the communication apparatus 2700 may complete data receiving and sending operations, or the processor may invoke program code in the memory, and implement a function of the transceiver unit in cooperation with the network interface 2702 when required.

In various implementations, the communication apparatus 2700 is configured to perform the alignment marker AM-based communication method provided in embodiments of this application, for example, perform the alignment marker AM-based communication method corresponding to embodiments shown in FIG. 11 to FIG. 25.

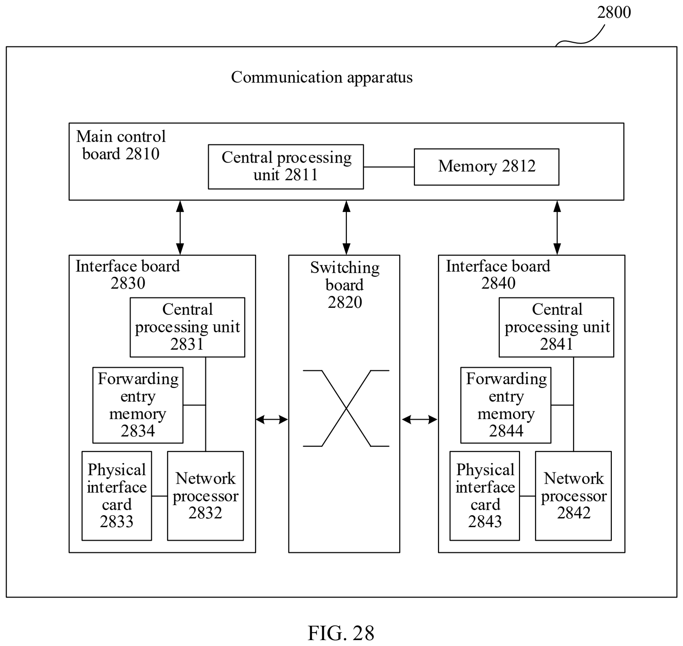

A specific structure of the communication apparatus in FIG. 27 in this application may be shown in FIG. 28.

FIG. 28 is a diagram of a structure of a communication apparatus 2800 according to an embodiment of this application. The communication apparatus 2800 includes a main control board 2810 and an interface board 2830.

The main control board 2810 is also referred to as a main processing unit (main processing unit, MPU) or a route processor (route processor). The main control board 2810 is configured to: control and manage components in the communication apparatus 2800, including functions of route computation, device management, device maintenance, and protocol processing. The main control board 2810 includes a central processing unit 2811 and a memory 2812.

The interface board 2830 is also referred to as a line processing unit (line processing unit, LPU), a line card (line card), or a service board. The interface board 2830 is configured to: provide various service interfaces, and forward a data packet. The service interfaces include but are not limited to an Ethernet interface and a POS (Packet over SONET/SDH) interface. The interface board 2830 includes a central processing unit 2831, a network processor 2832, a forwarding entry memory 2834, and a physical interface card (physical interface card, PIC) 2833.

The central processing unit 2831 on the interface board 2830 is configured to: control and manage the interface board 2830 and communicate with the central processing unit 2811 on the main control board 2810.

The network processor 2832 is configured to forward a packet. A form of the network processor 2832 may be a forwarding chip.

The physical interface card 2833 is configured to implement a physical layer interconnection function. Original traffic enters the interface board 2830 from the physical interface card 2833, and a processed packet is sent from the physical interface card 2833. The physical interface card 2833 includes at least one physical interface. The physical interface is also referred to as a physical port, and the physical interface may be a flexible Ethernet (Flexible Ethernet, FlexE) physical interface. The physical interface card 2833 is also referred to as a subcard, may be mounted on the interface board 2830, and is responsible for converting an optical/electrical signal into a packet, performing validity check on the packet, and forwarding the packet to the network processor 2832 for processing. In some embodiments, the central processing unit 2831 on the interface board 2830 may alternatively perform a function of the network processor 2832, for example, implement software forwarding based on a general-purpose CPU, so that the network processor 2832 is not needed in the interface board 2830.

Optionally, the communication apparatus 2800 includes a plurality of interface boards. For example, the communication apparatus 2800 further includes an interface board 2840. The interface board 2840 includes a central processing unit 2841, a network processor 2842, a forwarding entry memory 2844, and a physical interface card 2843.

Optionally, the communication apparatus 2800 further includes a switching board 2820. The switching board 2820 may also be referred to as a switch fabric unit (switch fabric unit, SFU). When the communication apparatus has a plurality of interface boards 2830, the switching board 2820 is configured to complete data exchange between the interface boards. For example, the interface board 2830 and the interface board 2840 may communicate with each other via the switching board 2820.

The main control board 2810 is coupled to the interface board. For example, the main control board 2810, the interface board 2830 and the interface board 2840, and the switching board 2820 are connected to a system backboard by using a system bus and/or a system backplane for interworking. In a possible implementation, an inter-process communication (inter-process communication, IPC) protocol channel is established between the main control board 2810 and the interface board 2830. The main control board 2810 and the interface board 2830 communicate with each other through the IPC channel.

Logically, the communication apparatus 2800 includes a control plane and a forwarding plane. The control plane includes the main control board 2810 and the central processing unit 2831. The forwarding plane includes components that perform forwarding, such as the forwarding entry memory 2834, the physical interface card 2833, and the network processor 2832. The control plane performs functions such as route advertising, generating a forwarding table, processing signaling and a protocol packet, and configuring and maintaining a device status. The control plane delivers the generated forwarding table to the forwarding plane. On the forwarding plane, the network processor 2832 searches the forwarding table delivered by the control plane to forward a packet received by the physical interface card 2833. The forwarding table delivered by the control plane may be stored in the forwarding entry memory 2834. In some embodiments, the control plane and the forwarding plane may be completely separated, and are not on a same device.

It should be understood that the transceiver module in the communication apparatus 2600 may be equivalent to the physical interface card 2833 or the physical interface card 2843 in the communication apparatus 2800; and the obtaining unit 27041 and the processing unit 27042 in the communication apparatus 2700 may be equivalent to the central processing unit 2811 or the central processing unit 2831 in the communication apparatus 2800, or may be equivalent to program code or instructions stored in the memory 2812.

It should be understood that operations performed on the interface board 2840 are consistent with operations performed on the interface board 2830 in this embodiment of this application. For brevity, details are not described. It should be understood that the communication apparatus 2800 in this embodiment may correspond to the first communication apparatus or the second communication apparatus in the foregoing method embodiments, and the main control board 2810, the interface board 2830, and/or the interface board 2840 in the communication apparatus 2800 may implement functions and/or various steps implemented by the first communication apparatus or the second communication apparatus in the foregoing method embodiments. For brevity, details are not described herein again.

It should be noted that, there may be one or more main control boards. When there are a plurality of main control boards, a primary main control board and a secondary main control board may be included. There may be one or more interface boards. A stronger data processing capability of the communication apparatus indicates a larger quantity of provided interface boards. There may also be one or more physical interface cards on the interface board. There may be no switching board or one or more switching boards. When there are a plurality of switching boards, load balancing and redundancy backup may be jointly implemented. In a centralized forwarding architecture, the communication apparatus may not need a switch fabric unit, and the interface board provides a function of processing service data of an entire system. In a distributed forwarding architecture, the communication apparatus may include at least one switch fabric unit, and exchange data between a plurality of interface boards through the switch fabric unit, to provide a large-capacity data exchange and processing capability. Optionally, a form of the communication apparatus may alternatively be only one card, to be specific, there is no switching board, and functions of the interface board and the main control board are integrated on the card. In this case, the central processing unit on the interface board and the central processing unit on the main control board may be combined into one central processing unit on the card, to perform functions obtained by superimposing the interface board and the main control board. A specific architecture that is to be used depends on a specific networking deployment scenario. This is not uniquely limited herein.

In some possible embodiments, the first communication apparatus and/or the second communication apparatus may be implemented as a virtualization device. The virtualization device may be a virtual machine (virtual machine, VM), a virtual router, or a virtual switch that runs a program for sending a packet. The virtualization device is deployed on a hardware device (for example, a physical server). For example, the first communication apparatus or the second communication apparatus may be implemented based on a general-purpose physical server in combination with a network functions virtualization (network functions virtualization, NFV) technology.

An embodiment of this application further provides a computer-readable storage medium, including instructions. When the instructions are run on a computer, the computer is enabled to control a terminal apparatus to perform any one of the implementations shown in the foregoing method embodiments.

An embodiment of this application further provides a computer program product. The computer program product includes computer program code. When the computer program code is run on a computer, the computer is enabled to perform any one of the implementations shown in the foregoing method embodiments.

Further, an embodiment of this application further provides a computer program product. When the computer program product runs on a computer, the computer is enabled to perform the methods performed in the method embodiments corresponding to FIG. 11 to FIG. 25.

An embodiment of this application further provides a chip system, including a processor and an interface circuit. The interface circuit is configured to: receive an instruction and transmit the instruction to the processor. The processor is configured to implement the method in any one of the foregoing method embodiments.

Optionally, the chip system further includes a memory, and there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and the method in any one of the foregoing method embodiments is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

The foregoing describes embodiments of this application in detail. Steps in the methods in embodiments of this application may be sequentially scheduled, combined, or deleted based on an actual requirement. Modules in the apparatuses in embodiments of this application may be divided, combined, or deleted based on an actual requirement.

It should be understood that "one embodiment" or "an embodiment" mentioned in the entire specification means that particular features, structures, or characteristics related to the embodiment are included in at least one embodiment of this application. Therefore, "in one embodiment" or "in an embodiment" appearing throughout the specification does not necessarily refer to a same embodiment. In addition, these particular features, structures, or characteristics may be combined in one or more embodiments in any appropriate manner. It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

The term "and/or" in this specification describes only an association relationship between associated objects and indicates that three relationships may exist. For example, A and/or B may represent the following three cases: Only A exists, both A and B exist, and only B exists. In addition, the character "/" in this specification usually indicates an "or" relationship between the associated objects.

It should be understood that in embodiments of this application, "B corresponding to A" indicates that B is associated with A, and B may be determined based on A. However, it should be further understood that determining B based on A does not mean that B is determined based only on A, and B may alternatively be determined based on A and/or other information.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the apparatus embodiments described above are merely examples. For example, division into the units is merely logical function division, and may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, in other words, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

## Claims

1. An alignment marker AM-based communication method, comprising:
sending, by a first communication apparatus, a first alignment marker AM to a second communication apparatus, wherein the first AM indicates the second communication apparatus to adjust a forward error correction FEC mode; and
receiving, by the first communication apparatus, a second AM from the second communication apparatus, wherein the second AM indicates that the second communication apparatus has adjusted the FEC mode.

2. The method according to claim 1, wherein
the first AM comprises a first unique marker UM field combination, the first UM field combination comprises a plurality of UM fields, and the first UM field combination indicates the second communication apparatus to adjust the FEC mode.

3. The method according to claim 2, wherein
the first UM field combination indicates the second communication apparatus to upgrade a type of the FEC mode; or
the first UM field combination indicates the second communication apparatus to downgrade a type of the FEC mode.

4. The method according to any one of claims 1 to 3, wherein
the second AM comprises a second unique marker UM field combination, the second UM field combination comprises a plurality of UM fields, and the second UM field combination indicates that the second communication apparatus has adjusted the FEC mode.

5. The method according to claim 4, wherein
the second UM field combination indicates that the second communication apparatus has upgraded the type of the FEC mode; or
the second UM field combination indicates that the second communication apparatus has downgraded the type of the FEC mode.

6. The method according to any one of claims 1 to 5, wherein
the first UM field combination is formed by a codeword comprised in a first codeword set; and
the first codeword set comprises a plurality of codewords, the codeword comprised in the first codeword set is formed by 5-bit payload data and 11 parity bits, and the parity bits are obtained by encoding the payload data using an extended Bose-Chaudhuri-Hocquenghem eBCH (16, 5) encoding scheme.

7. The method according to any one of claims 1 to 5, wherein
the second UM field combination is formed by a codeword comprised in a first codeword set; and
the first codeword set comprises a plurality of codewords, the codeword comprised in the first codeword set is formed by 5-bit payload data and 11 parity bits, and the parity bits are obtained by encoding the payload data using an extended Bose-Chaudhuri-Hocquenghem eBCH (16, 5) encoding scheme.

8. The method according to claim 6 or 7, wherein the first codeword set comprises any one or more of the following codewords:
0 0 1 0 0 0 1 1 1 1 0 1 0 1 1 0,
0 1 0 0 0 1 1 1 1 0 1 0 1 1 0 0,
0 1 0 1 1 0 0 1 0 0 0 1 1 1 1 0,
0 1 1 0 1 1 1 0 0 0 0 1 0 1 0 1,
0 1 1 1 0 0 0 0 1 0 1 0 0 1 1 1,
1000111101011000,
1011001000111100,
1 0 1 1 1 0 0 0 0 1 0 1 0 0 1 1,
1 1 0 1 0 1 1 0 0 1 0 0 0 1 1 0, or
1101110000101001.

9. The method according to any one of claims 1 to 8, wherein
a length of the first AM is 120 bits, and a length of the second AM is 120 bits.

10. The method according to claim 9, wherein the first AM further comprises a first common marker CM field combination and a first unique pad UP field;
the first CM field combination comprises six CM fields, each having a length of eight bits;
the six CM fields comprised in the first CM field combination are evenly separated by the first UP field, and a length of the first UP field is eight bits; and
the first UM field combination comprises eight UM fields, each having a length of eight bits.

11. The method according to claim 9, wherein the first UM field combination comprises a first UM field, a second UM field, a third UM field, a fourth UM field, a fifth UM field, a sixth UM field, a seventh UM field, and an eighth UM field, wherein
the first UM field and the second UM field are formed by a first codeword;
the third UM field and the fourth UM field are formed by a second codeword;
the fifth UM field and the sixth UM field are formed by a third codeword;
the seventh UM field and the eighth UM field are formed by a fourth codeword; and
the first codeword, the second codeword, the third codeword, and the fourth codeword belong to the first codeword set.

12. The method according to any one of claims 9 to 11, wherein the second AM further comprises a second common marker CM field combination and a second unique pad UP field;
the second CM field combination comprises six CM fields, each having a length of eight bits;
the six CM fields comprised in the second CM field combination are evenly separated by the second UP field, and a length of the second UP field is eight bits; and
the second UM field combination comprises eight UM fields, each having a length of eight bits.

13. The method according to claim 12, wherein the second UM field combination comprises a ninth UM field, a tenth UM field, an eleventh UM field, a twelfth UM field, a thirteenth UM field, a fourteenth UM field, a fifteenth UM field, and a sixteenth UM field, wherein
the ninth UM field and the tenth UM field are formed by a fifth codeword;
the eleventh UM field and the twelfth UM field are formed by a sixth codeword;
the thirteenth UM field and the fourteenth UM field are formed by a seventh codeword;
the fifteenth UM field and the sixteenth UM field are formed by an eighth codeword; and
the fifth codeword, the sixth codeword, the seventh codeword, and the eighth codeword belong to the first codeword set.

14. The method according to claim 10 or 11, wherein the first UP field is any one of the following: 0x1E, 0x2D, 0x4B, 0x78, 0x87, 0xB4, 0xD2, 0x87, or 0xE1.

15. The method according to claim 12 or 13, wherein the second UP field is any one of the following: 0x1E, 0x2D, 0x4B, 0x78, 0x87, 0xB4, 0xD2, 0x87, or 0xE1.

16. The method according to any one of claims 1 to 15, wherein
after sending, by the first communication apparatus, the first alignment marker AM to the second communication apparatus, the method further comprises:
sending, by the first communication apparatus, a third alignment marker AM to the second communication apparatus, wherein the third AM indicates the second communication apparatus to adjust the forward error correction FEC mode; and
after receiving, by the first communication apparatus, the second AM from the second communication apparatus, the method further comprises:
receiving, by the first communication apparatus, a fourth AM from the second communication apparatus, wherein the fourth AM indicates that the second communication apparatus has adjusted the FEC mode.

17. An alignment marker AM-based communication method, comprising:
receiving, by a second communication apparatus, a first alignment marker AM from a first communication apparatus, wherein the first AM indicates the second communication apparatus to adjust a forward error correction FEC mode;
sending, by the second communication apparatus, a second AM to the first communication apparatus, wherein the second AM indicates that the second communication apparatus has adjusted the FEC mode; and
communicating, by the second communication apparatus, with the first communication apparatus using the adjusted FEC mode.

18. The method according to claim 17, wherein
the first AM comprises a first unique marker UM field combination, the first UM field combination comprises a plurality of UM fields, and the first UM field combination indicates the second communication apparatus to adjust the FEC mode.

19. The method according to claim 18, wherein
the first UM field combination indicates the second communication apparatus to upgrade a type of the FEC mode; or
the first UM field combination indicates the second communication apparatus to downgrade a type of the FEC mode.

20. The method according to any one of claims 17 to 19, wherein
the second AM comprises a second unique marker UM field combination, the second UM field combination comprises a plurality of UM fields, and the second UM field combination indicates that the second communication apparatus has adjusted the FEC mode.

21. The method according to claim 20, wherein
the second UM field combination indicates that the second communication apparatus has upgraded the type of the FEC mode; or
the second UM field combination indicates that the second communication apparatus has downgraded the type of the FEC mode.

22. The method according to any one of claims 17 to 21, wherein
the first UM field combination is formed by a codeword comprised in a first codeword set; and
the first codeword set comprises a plurality of codewords, the codeword comprised in the first codeword set is formed by 5-bit payload data and 11 parity bits, and the parity bits are obtained by encoding the payload data using an extended Bose-Chaudhuri-Hocquenghem eBCH (16, 5) encoding scheme.

23. The method according to any one of claims 17 to 21, wherein
the second UM field combination is formed by a codeword comprised in a first codeword set; and
the first codeword set comprises a plurality of codewords, the codeword comprised in the first codeword set is formed by 5-bit payload data and 11 parity bits, and the parity bits are obtained by encoding the payload data using an extended Bose-Chaudhuri-Hocquenghem eBCH (16, 5) encoding scheme.

24. The method according to claim 22 or 23, wherein the first codeword set comprises any one or more of the following codewords:
0 0 1 0 0 0 1 1 1 1 0 1 0 1 1 0,
0 1 0 0 0 1 1 1 1 0 1 0 1 1 0 0,
0 1 0 1 1 0 0 1 0 0 0 1 1 1 1 0,
0110111000010101,
0 1 1 1 0 0 0 0 1 0 1 0 0 1 1 1,
1000111101011000,
1011001000111100,
1 0 1 1 1 0 0 0 0 1 0 1 0 0 1 1,
1 1 0 1 0 1 1 0 0 1 0 0 0 1 1 0, or
1101110000101001.

25. The method according to any one of claims 17 to 24, wherein
a length of the first AM is 120 bits, and a length of the second AM is 120 bits.

26. The method according to claim 25, wherein the first AM further comprises a first common marker CM field combination and a first unique pad UP field;
the first CM field combination comprises six CM fields, each having a length of eight bits;
the six CM fields comprised in the first CM field combination are evenly separated by the first UP field, and a length of the first UP field is eight bits; and
the first UM field combination comprises eight UM fields, each having a length of eight bits.

27. The method according to claim 25, wherein the first UM field combination comprises a first UM field, a second UM field, a third UM field, a fourth UM field, a fifth UM field, a sixth UM field, a seventh UM field, and an eighth UM field, wherein
the first UM field and the second UM field are formed by a first codeword;
the third UM field and the fourth UM field are formed by a second codeword;
the fifth UM field and the sixth UM field are formed by a third codeword;
the seventh UM field and the eighth UM field are formed by a fourth codeword; and
the first codeword, the second codeword, the third codeword, and the fourth codeword belong to the first codeword set.

28. The method according to any one of claims 25 to 27, wherein the second AM further comprises a second common marker CM field combination and a second unique pad UP field;
the second CM field combination comprises six CM fields, each having a length of eight bits;
the six CM fields comprised in the second CM field combination are evenly separated by the second UP field, and a length of the second UP field is eight bits; and
the second UM field combination comprises eight UM fields, each having a length of eight bits.

29. The method according to claim 28, wherein the second UM field combination comprises a ninth UM field, a tenth UM field, an eleventh UM field, a twelfth UM field, a thirteenth UM field, a fourteenth UM field, a fifteenth UM field, and a sixteenth UM field, wherein
the ninth UM field and the tenth UM field are formed by a fifth codeword;
the eleventh UM field and the twelfth UM field are formed by a sixth codeword;
the thirteenth UM field and the fourteenth UM field are formed by a seventh codeword;
the fifteenth UM field and the sixteenth UM field are formed by an eighth codeword; and
the fifth codeword, the sixth codeword, the seventh codeword, and the eighth codeword belong to the first codeword set.

30. The method according to claim 28 or 29, wherein the first UP field is any one of the following: 0x1E, 0x2D, 0x4B, Ox78, 0x87, OxB4, OxD2, 0x87, or OxE1.

31. The method according to claim 28 or 29, wherein the second UP field is any one of the following: 0x1E, 0x2D, 0x4B, Ox78, 0x87, OxB4, OxD2, 0x87, or 0xE1.

32. The method according to any one of claims 17 to 31, wherein
after receiving, by the second communication apparatus, the first alignment marker AM from the first communication apparatus, the method further comprises:
receiving, by the second communication apparatus, a third alignment marker AM from the first communication apparatus, wherein the third AM indicates the second communication apparatus to adjust the forward error correction FEC mode; and
after sending, by the second communication apparatus, the second AM to the first communication apparatus, the method further comprises:
sending, by the second communication apparatus, a fourth AM to the first communication apparatus, wherein the fourth AM indicates that the second communication apparatus has adjusted the FEC mode.

33. A communication apparatus, comprising a processor and a memory, wherein
the processor stores instructions, and when the instructions are run on the processor, the method according to any one of claims 1 to 16 is implemented.

34. A communication apparatus, comprising a processor and a memory, wherein
the processor stores instructions, and when the instructions are run on the processor, the method according to any one of claims 17 to 32 is implemented.

35. A communication system, comprising the communication apparatus configured to perform the method according to any one of claims 1 to 16, and the communication apparatus configured to perform the method according to any one of claims 17 to 32.

36. A chip, comprising a processing unit and a power supply circuit, wherein
the power supply circuit supplies power to the processing unit, and the processing unit is configured to perform the method according to any one of claims 1 to 16 or claims 17 to 32.

37. A computer-readable storage medium, wherein the computer-readable storage medium stores instructions, and when the instructions are run on a processor, the method according to any one of claims 1 to 16 or claims 17 to 32 is implemented.

38. A computer program product, wherein when the computer program product is executed on a processor, the method according to any one of claims 1 to 16 or claims 17 to 32 is implemented.
